# EUROPEAN PATENT APPLICATION

(11) **EP 4 513 838 A1**
(43) Date of publication of application: **26.02.2025**
(21) Application number: 23792092.1
(22) Date of filing: 12.04.2023
(51) Int. Cl.: H04L 27/26, H04L 5/00, H04W 84/12, H04B 7/0452

(54) **METHOD AND DEVICE FOR AGGREGATED PHYSICAL LAYER PROTOCOL DATA UNIT TRANSMISSION AND RECEPTION IN WIRELESS LAN SYSTEM**

(30) Priority: 22.04.2022 KR 20220050305; 03.05.2022 KR 20220054959
(71) Applicant: LG Electronics Inc., Yeongdeungpo-gu Seoul 07336 (KR)
(72) Inventor: PARK, Eunsung, Seoul 06772 (KR); CHUN, Jinyoung, Seoul 06772 (KR); CHOI, Jinsoo, Seoul 06772 (KR); LIM, Dongguk, Seoul 06772 (KR); JUNG, Insik, Seoul 06772 (KR)
(74) Representative: Plasseraud IP
(86) International application number: PCT/KR2023/004916
(87) International publication number: WO 2023/204514

(57) **Abstract**

Disclosed are an operating method and device in a wireless LAN system. A method performed in a wireless LAN system by a first STA according to an embodiment disclosed herein comprises the steps of: receiving a specific PPDU, including a plurality of S-PPDUs, from a second STA; and decoding a first S-PPDU received in a primary 160 MHZ channel from among the plurality of S-PPDUs, wherein the first S-PPDU includes information indicating that the specific PPDU is an A-PPDU. The specific PPDU includes a first pre-padding field and a second S-PPDU from among the plurality of S-PPDUs in a first secondary 160 MHZ channel or a secondary 320 MHZ channel, and the length of the first pre-padding field may be the length from an L-STF included in the first S-PPDU to an HE-SIG-B field or an EHT-SIG field.

## Description

### [TECHNICAL FIELD]

The present disclosure relates to a communication operation in a wireless local area network (WLAN) system, and more specifically, to a method and device for transmitting and receiving an aggregated physical layer protocol data unit (PPDU) in a next-generation wireless LAN system.

### [Background Art]

New technologies for improving transmission rates, increasing bandwidth, improving reliability, reducing errors, and reducing latency have been introduced for a wireless LAN (WLAN). Among WLAN technologies, an Institute of Electrical and Electronics Engineers (IEEE) 802.11 series standard may be referred to as Wi-Fi. For example, technologies recently introduced to WLAN include enhancements for Very High-Throughput (VHT) of the 802.11ac standard, and enhancements for High Efficiency (HE) of the IEEE 802.11ax standard.

In order to provide a more improved wireless communication environment, an enhancement technologies for EHT (Extremely High Throughput) are being discussed. For example, technologies for multiple access point (AP) coordination and multiple input multiple output (MIMO) supporting an increased bandwidth, efficient utilization of multiple bands and increased spatial streams are being studied, and, in particular, various technologies for supporting low latency or real-time traffic are being studied. Furthermore, new technologies are being discussed to support ultra-high reliability (UHR), including improvements or extensions of EHT technology.

### [Disclosure]

### [Technical Problem]

The technical problem of the present disclosure is to provide a method and device for performing A(aggregated)-PPDU transmission and reception in a wireless LAN system.

The additional technical problem of the present disclosure is to provide a structure of an A-PPDU configured in a 480 MHz/640 MHz band in a wireless LAN system.

The additional technical problem of the present disclosure is to provide a method and device for decoding an A-PPDU including a pre-padding field.

The technical objects to be achieved by the present disclosure are not limited to the above-described technical objects, and other technical objects which are not described herein will be clearly understood by those skilled in the pertinent art from the following description.

### [Technical Solution]

A method for performing communication by a first station (STA) in a wireless LAN system according to one aspect of the present disclosure may include receiving, from a second STA, a specific physical layer protocol data unit (PPDU) including a plurality of sub-PPDUs (S-PPDUs); and decoding a first S-PPDU received on a primary 160 MHz channel among the plurality of S-PPDUs, wherein the first S-PPDU including information indicating that the specific PPDU is an A (aggregated)-PPDU, and the specific PPDU may include a second S-PPDU and a first pre-padding field among the plurality of S-PPDUs in a first secondary 160 MHz channel or a secondary 320 MHz channel, and a length of the first pre-padding field may be a length from an L(legacy)-STF(short training field) included in the first S-PPDU to an HE(high throughput)-SIG-B field or an EHT(extremely high throughput)-SIG field.

A method for performing communication by a second station (STA) in a wireless LAN system according to an additional aspect of the present disclosure may include generating a specific physical layer protocol data unit (PPDU) including multiple sub-PPDUs (S-PPDUs); transmitting the specific PPDU to at least one STA including the first STA, and the specific PPDU may include a first S-PPDU among the plurality of S-PPDUs in a primary 160 MHz channel, a second S-PPDU among the plurality of S-PPDUs in a first secondary 160 MHz channel or a secondary 320 MHz channel, and a first pre-padding field, the first S-PPDU may include information indicating that the specific PPDU is an A(aggregated)-PPDU, and a length of the first pre-padding field may be a length from an L(legacy)-STF(short training field) included in the first S-PPDU to an HE(high throughput)-SIG-B field or an EHT(extremely high throughput)-SIG field.

### [Technical Effects]

According to various embodiments of the present disclosure, a method and device for performing A(aggregated)-PPDU transmission and reception in a wireless LAN system may be provided.

An additional technical problem of the present disclosure is that a structure of an A-PPDU configured in a 480 MHz/640 MHz band in a wireless LAN system may be provided.

An additional technical problem of the present disclosure is that a method and device for decoding an A-PPDU including a pre-padding field may be provided.

Effects achievable by the present disclosure are not limited to the above-described effects, and other effects which are not described herein may be clearly understood by those skilled in the pertinent art from the following description.

### [Description of Diagrams]

Accompanying drawings included as part of detailed description for understanding the present disclosure provide embodiments of the present disclosure and describe technical features of the present disclosure with detailed description.
FIG. 1 illustrates a block configuration diagram of a wireless communication device according to an embodiment of the present disclosure.
FIG. 2 is a diagram illustrating an exemplary structure of a WLAN system to which the present disclosure may be applied.
FIG. 3 is a diagram for describing a link setup process to which the present disclosure may be applied.
FIG. 4 is a diagram for describing a backoff process to which the present disclosure may be applied.
FIG. 5 is a diagram for describing a frame transmission operation based on CSMA/CA to which the present disclosure may be applied.
FIG. 6 is a diagram for describing an example of a frame structure used in a WLAN system to which the present disclosure may be applied.
FIG. 7 is a diagram illustrating examples of PPDUs defined in the IEEE 802.11 standard to which the present disclosure may be applied.
FIGs. 8 to 10 are diagrams for describing examples of resource units of a WLAN system to which the present disclosure may be applied.
FIG. 11 illustrates an example structure of a HE-SIG-B field.
FIG. 12 is a diagram for describing a MU-MIMO method in which a plurality of users/STAs are allocated to one RU.
FIG. 13 illustrates an example of a PPDU format to which the present disclosure may be applied.
FIG. 14 illustrates an example of an A-PPDU format to which the present disclosure can be applied.
FIG. 15 is a diagram for explaining an operation performed by a first STA according to an embodiment of the present disclosure.
FIG. 16 is a diagram for explaining an operation performed by a second STA according to an embodiment of the present disclosure.
FIG. 17 illustrates an example of an A-PPDU format to which the present disclosure may be applied.
FIG. 18 is a diagram for explaining a PPDU transmission and reception procedure between a transmitting STA and a receiving STA according to an embodiment of the present disclosure.

### [Best Mode]

Hereinafter, embodiments according to the present disclosure will be described in detail by referring to accompanying drawings. Detailed description to be disclosed with accompanying drawings is to describe exemplary embodiments of the present disclosure and is not to represent the only embodiment that the present disclosure may be implemented. The following detailed description includes specific details to provide complete understanding of the present disclosure. However, those skilled in the pertinent art knows that the present disclosure may be implemented without such specific details.

In some cases, known structures and devices may be omitted or may be shown in a form of a block diagram based on a core function of each structure and device in order to prevent a concept of the present disclosure from being ambiguous.

In the present disclosure, when an element is referred to as being "connected", "combined" or "linked" to another element, it may include an indirect connection relation that yet another element presents therebetween as well as a direct connection relation. In addition, in the present disclosure, a term, "include" or "have", specifies the presence of a mentioned feature, step, operation, component and/or element, but it does not exclude the presence or addition of one or more other features, stages, operations, components, elements and/or their groups.

In the present disclosure, a term such as "first", "second", etc. is used only to distinguish one element from other element and is not used to limit elements, and unless otherwise specified, it does not limit an order or importance, etc. between elements. Accordingly, within a scope of the present disclosure, a first element in an embodiment may be referred to as a second element in another embodiment and likewise, a second element in an embodiment may be referred to as a first element in another embodiment.

A term used in the present disclosure is to describe a specific embodiment, and is not to limit a claim. As used in a described and attached claim of an embodiment, a singular form is intended to include a plural form, unless the context clearly indicates otherwise. A term used in the present disclosure, "and/or", may refer to one of related enumerated items or it means that it refers to and includes any and all possible combinations of two or more of them. In addition, "/" between words in the present disclosure has the same meaning as "and/or", unless otherwise described.

Examples of the present disclosure may be applied to various wireless communication systems. For example, examples of the present disclosure may be applied to a wireless LAN system. For example, examples of the present disclosure may be applied to an IEEE 802.11a/g/n/ac/ax standards-based wireless LAN. Furthermore, examples of the present disclosure may be applied to a wireless LAN based on the newly proposed IEEE 802.11be (or EHT) standard. Examples of the present disclosure may be applied to an IEEE 802.11be Release-2 standard-based wireless LAN corresponding to an additional enhancement technology of the IEEE 802.11be Release-1 standard. Additionally, examples of the present disclosure may be applied to a next-generation standards-based wireless LAN after IEEE 802.11be. Further, examples of this disclosure may be applied to a cellular wireless communication system. For example, it may be applied to a cellular wireless communication system based on Long Term Evolution (LTE)-based technology and 5G New Radio (NR)-based technology of the 3rd Generation Partnership Project (3GPP) standard.

Hereinafter, technical features to which examples of the present disclosure may be applied will be described.

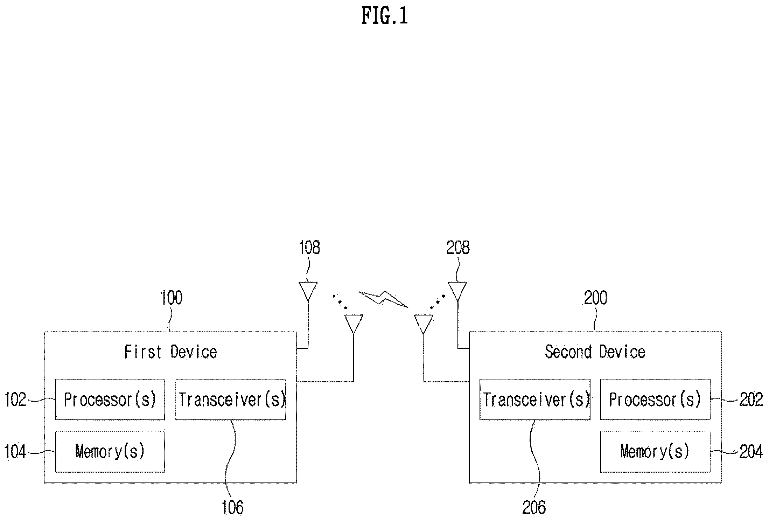

FIG. 1 illustrates a block diagram of a wireless communication device according to an embodiment of the present disclosure.

The first device 100 and the second device 200 illustrated in FIG. 1 may be replaced with various terms such as a terminal, a wireless device, a Wireless Transmit Receive Unit (WTRU), an User Equipment (UE), a Mobile Station (MS), an user terminal (UT), a Mobile Subscriber Station (MSS), a Mobile Subscriber Unit (MSU), a subscriber station (SS), an advanced mobile station (AMS), a wireless terminal (WT), or simply user, etc. In addition, the first device 100 and the second device 200 include an access point (AP), a base station (BS), a fixed station, a Node B, a base transceiver system (BTS), a network, It may be replaced with various terms such as an Artificial Intelligence (AI) system, a road side unit (RSU), a repeater, a router, a relay, and a gateway.

The devices 100 and 200 illustrated in FIG. 1 may be referred to as stations (STAs). For example, the devices 100 and 200 illustrated in FIG. 1 may be referred to by various terms such as a transmitting device, a receiving device, a transmitting STA, and a receiving STA. For example, the STAs 110 and 200 may perform an access point (AP) role or a non-AP role. That is, in the present disclosure, the STAs 110 and 200 may perform functions of an AP and/or a non-AP. When the STAs 110 and 200 perform an AP function, they may be simply referred to as APs, and when the STAs 110 and 200 perform non-AP functions, they may be simply referred to as STAs. In addition, in the present disclosure, an AP may also be indicated as an AP STA.

Referring to FIG. 1, the first device 100 and the second device 200 may transmit and receive radio signals through various wireless LAN technologies (e.g., IEEE 802.11 series). The first device 100 and the second device 200 may include an interface for a medium access control (MAC) layer and a physical layer (PHY) conforming to the IEEE 802.11 standard.

In addition, the first device 100 and the second device 200 may additionally support various communication standards (e.g., 3GPP LTE series, 5G NR series standards, etc.) technologies other than wireless LAN technology. In addition, the device of the present disclosure may be implemented in various devices such as a mobile phone, a vehicle, a personal computer, augmented reality (AR) equipment, and virtual reality (VR) equipment, etc. In addition, the STA of the present specification may support various communication services such as a voice call, a video call, data communication, autonomous-driving, machine-type communication (MTC), machine-to-machine (M2M), device-to-device (D2D), IoT (Internet-of-Things), etc.

A first device 100 may include one or more processors 102 and one or more memories 104 and may additionally include one or more transceivers 106 and/or one or more antennas 108. A processor 102 may control a memory 104 and/or a transceiver 106 and may be configured to implement description, functions, procedures, proposals, methods and/or operation flow charts disclosed in the present disclosure. For example, a processor 102 may transmit a wireless signal including first information/signal through a transceiver 106 after generating first information/signal by processing information in a memory 104. In addition, a processor 102 may receive a wireless signal including second information/signal through a transceiver 106 and then store information obtained by signal processing of second information/signal in a memory 104. A memory 104 may be connected to a processor 102 and may store a variety of information related to an operation of a processor 102. For example, a memory 104 may store a software code including instructions for performing all or part of processes controlled by a processor 102 or for performing description, functions, procedures, proposals, methods and/or operation flow charts disclosed in the present disclosure. Here, a processor 102 and a memory 104 may be part of a communication modem/circuit/chip designed to implement a wireless LAN technology (e.g., IEEE 802.11 series). A transceiver 106 may be connected to a processor 102 and may transmit and/or receive a wireless signal through one or more antennas 108. A transceiver 106 may include a transmitter and/or a receiver. A transceiver 106 may be used together with a RF (Radio Frequency) unit. In the present disclosure, a device may mean a communication modem/circuit/chip.

A second device 200 may include one or more processors 202 and one or more memories 204 and may additionally include one or more transceivers 206 and/or one or more antennas 208. A processor 202 may control a memory 204 and/or a transceiver 206 and may be configured to implement description, functions, procedures, proposals, methods and/or operation flows charts disclosed in the present disclosure. For example, a processor 202 may generate third information/signal by processing information in a memory 204, and then transmit a wireless signal including third information/signal through a transceiver 206. In addition, a processor 202 may receive a wireless signal including fourth information/signal through a transceiver 206, and then store information obtained by signal processing of fourth information/signal in a memory 204. A memory 204 may be connected to a processor 202 and may store a variety of information related to an operation of a processor 202. For example, a memory 204 may store a software code including instructions for performing all or part of processes controlled by a processor 202 or for performing description, functions, procedures, proposals, methods and/or operation flow charts disclosed in the present disclosure. Here, a processor 202 and a memory 204 may be part of a communication modem/circuit/chip designed to implement a wireless LAN technology (e.g., IEEE 802.11 series). A transceiver 206 may be connected to a processor 202 and may transmit and/or receive a wireless signal through one or more antennas 208. A transceiver 206 may include a transmitter and/or a receiver. A transceiver 206 may be used together with a RF unit. In the present disclosure, a device may mean a communication modem/circuit/chip.

Hereinafter, a hardware element of a device 100, 200 will be described in more detail. It is not limited thereto, but one or more protocol layers may be implemented by one or more processors 102, 202. For example, one or more processors 102, 202 may implement one or more layers (e.g., a functional layer such as PHY, MAC). One or more processors 102, 202 may generate one or more PDUs (Protocol Data Unit) and/or one or more SDUs (Service Data Unit) according to description, functions, procedures, proposals, methods and/or operation flow charts disclosed in the present disclosure. One or more processors 102, 202 may generate a message, control information, data or information according to description, functions, procedures, proposals, methods and/or operation flow charts disclosed in the present disclosure. One or more processors 102, 202 may generate a signal (e.g., a baseband signal) including a PDU, a SDU, a message, control information, data or information according to functions, procedures, proposals and/or methods disclosed in the present disclosure to provide it to one or more transceivers 106, 206. One or more processors 102, 202 may receive a signal (e.g., a baseband signal) from one or more transceivers 106, 206 and obtain a PDU, a SDU, a message, control information, data or information according to description, functions, procedures, proposals, methods and/or operation flow charts disclosed in the present disclosure.

One or more processors 102, 202 may be referred to as a controller, a micro controller, a micro processor or a micro computer. One or more processors 102, 202 may be implemented by a hardware, a firmware, a software, or their combination. In an example, one or more ASICs (Application Specific Integrated Circuit), one or more DSPs(Digital Signal Processor), one or more DSPDs(Digital Signal Processing Device), one or more PLDs(Programmable Logic Device) or one or more FPGAs(Field Programmable Gate Arrays) may be included in one or more processors 102, 202. Description, functions, procedures, proposals, methods and/or operation flow charts disclosed in the present disclosure may be implemented by using a firmware or a software and a firmware or a software may be implemented to include a module, a procedure, a function, etc. A firmware or a software configured to perform description, functions, procedures, proposals, methods and/or operation flow charts disclosed in the present disclosure may be included in one or more processors 102, 202 or may be stored in one or more memories 104, 204 and driven by one or more processors 102, 202. Description, functions, procedures, proposals, methods and/or operation flow charts disclosed in the present disclosure may be implemented by using a firmware or a software in a form of a code, an instruction and/or a set of instructions.

One or more memories 104, 204 may be connected to one or more processors 102, 202 and may store data, a signal, a message, information, a program, a code, an indication and/or an instruction in various forms. One or more memories 104, 204 may be configured with ROM, RAM, EPROM, a flash memory, a hard drive, a register, a cash memory, a computer readable storage medium and/or their combination. One or more memories 104, 204 may be positioned inside and/or outside one or more processors 102, 202. In addition, one or more memories 104, 204 may be connected to one or more processors 102, 202 through a variety of technologies such as a wire or wireless connection.

One or more transceivers 106, 206 may transmit user data, control information, a wireless signal/channel, etc. mentioned in methods and/or operation flow charts, etc. of the present disclosure to one or more other devices. One or more transceivers 106, 206 may receiver user data, control information, a wireless signal/channel, etc. mentioned in description, functions, procedures, proposals, methods and/or operation flow charts, etc. disclosed in the present disclosure from one or more other devices. For example, one or more transceivers 106, 206 may be connected to one or more processors 102, 202 and may transmit and receive a wireless signal. For example, one or more processors 102, 202 may control one or more transceivers 106, 206 to transmit user data, control information or a wireless signal to one or more other devices. In addition, one or more processors 102, 202 may control one or more transceivers 106, 206 to receive user data, control information or a wireless signal from one or more other devices. In addition, one or more transceivers 106, 206 may be connected to one or more antennas 108, 208 and one or more transceivers 106, 206 may be configured to transmit and receive user data, control information, a wireless signal/channel, etc. mentioned in description, functions, procedures, proposals, methods and/or operation flow charts, etc. disclosed in the present disclosure through one or more antennas 108, 208. In the present disclosure, one or more antennas may be a plurality of physical antennas or a plurality of logical antennas (e.g., an antenna port). One or more transceivers 106, 206 may convert a received wireless signal/channel, etc. into a baseband signal from a RF band signal to process received user data, control information, wireless signal/channel, etc. by using one or more processors 102, 202. One or more transceivers 106, 206 may convert user data, control information, a wireless signal/channel, etc. which are processed by using one or more processors 102, 202 from a baseband signal to a RF band signal. Therefore, one or more transceivers 106, 206 may include an (analogue) oscillator and/or a filter.

For example, one of the STAs 100 and 200 may perform an intended operation of an AP, and the other of the STAs 100 and 200 may perform an intended operation of a non-AP STA. For example, the transceivers 106 and 206 of FIG. 1 may perform a transmission and reception operation of a signal (e.g., a packet or a physical layer protocol data unit (PPDU) conforming to IEEE 802.11a/b/g/n/ac/ax/be). In addition, in the present disclosure, an operation in which various STAs generate transmission/reception signals or perform data processing or calculation in advance for transmission/reception signals may be performed by the processors 102 and 202 of FIG. 1. For example, an example of an operation of generating a transmission/reception signal or performing data processing or calculation in advance for the transmission/reception signal may include 1) determining / acquiring / configuring / calculating / decoding / encoding bit information of fields (signal (SIG), short training field (STF), long training field (LTF), Data, etc.) included in the PPDU, 2) determining / configuring / acquiring time resources or frequency resources (e.g., subcarrier resources) used for fields (SIG, STF, LTF, Data, etc.) included in the PPDU; 3) determining / configuring / acquiring a specific sequence (e.g., pilot sequence, STF/LTF sequence, extra sequence applied to SIG) used for fields (SIG, STF, LTF, Data, etc.) included in the PPDU action, 4) power control operation and/or power saving operation applied to the STA, 5) Operations related to ACK signal determination/acquisition/configuration/calculation/decoding/ encoding, etc. In addition, in the following example, various information (e.g., information related to fields / subfields / control fields / parameters / power, etc.) used by various STAs to determine / acquire / configure / calculate / decode / encode transmission and reception signals may be stored in the memories 104 and 204 of FIG. 1.

Hereinafter, downlink (DL) may mean a link for communication from an AP STA to a non-AP STA, and a DL PPDU / packet / signal may be transmitted and received through the DL. In DL communication, a transmitter may be part of an AP STA, and a receiver may be part of a non-AP STA. Uplink (UL) may mean a link for communication from non-AP STAs to AP STAs, and a UL PPDU / packet / signal may be transmitted and received through the UL. In UL communication, a transmitter may be part of a non-AP STA, and a receiver may be part of an AP STA.

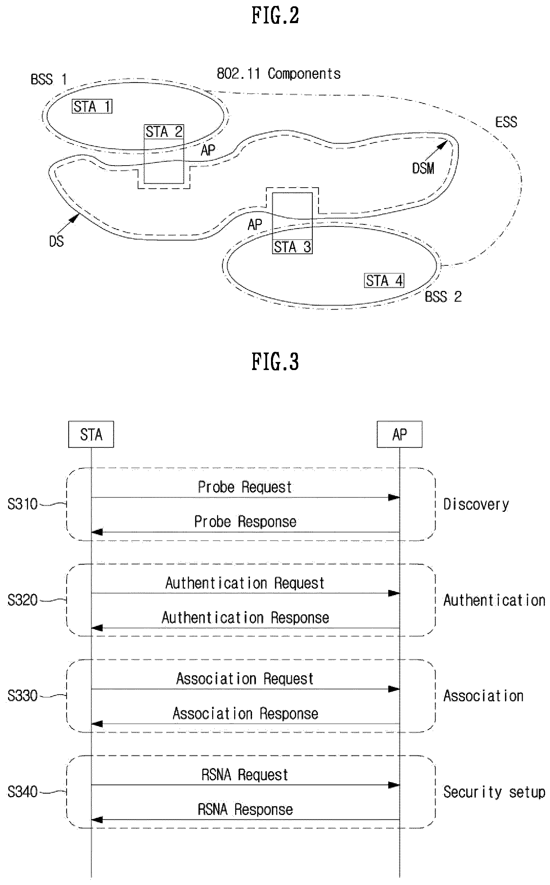

FIG. 2 is a diagram illustrating an exemplary structure of a wireless LAN system to which the present disclosure may be applied.

The structure of the wireless LAN system may consist of be composed of a plurality of components. A wireless LAN supporting STA mobility transparent to an upper layer may be provided by interaction of a plurality of components. A Basic Service Set (BSS) corresponds to a basic construction block of a wireless LAN. FIG. 2 exemplarily shows that two BSSs (BSS1 and BSS2) exist and two STAs are included as members of each BSS (STA1 and STA2 are included in BSS1, and STA3 and STA4 are included in BSS2). An ellipse representing a BSS in FIG. 2 may also be understood as representing a coverage area in which STAs included in the corresponding BSS maintain communication. This area may be referred to as a Basic Service Area (BSA). When an STA moves out of the BSA, it may not directly communicate with other STAs within the BSA.

If the DS shown in FIG. 2 is not considered, the most basic type of BSS in a wireless LAN is an independent BSS (IBSS). For example, IBSS may have a minimal form containing only two STAs. For example, assuming that other components are omitted, BSS1 containing only STA1 and STA2 or BSS2 containing only STA3 and STA4 may respectively correspond to representative examples of IBSS. This configuration is possible when STAs may communicate directly without an AP. In addition, in this type of wireless LAN, it is not configured in advance, but may be configured when a LAN is required, and this may be referred to as an ad-hoc network. Since the IBSS does not include an AP, there is no centralized management entity. That is, in IBSS, STAs are managed in a distributed manner. In IBSS, all STAs may be made up of mobile STAs, and access to the distributed system (DS) is not allowed, forming a self-contained network.

Membership of an STA in the BSS may be dynamically changed by turning on or off the STA, entering or exiting the BSS area, and the like. To become a member of the BSS, the STA may join the BSS using a synchronization process. In order to access all services of the BSS infrastructure, the STA shall be associated with the BSS. This association may be dynamically established and may include the use of a Distribution System Service (DSS).

A direct STA-to-STA distance in a wireless LAN may be limited by PHY performance. In some cases, this distance limit may be sufficient, but in some cases, communication between STAs at a longer distance may be required. A distributed system (DS) may be configured to support extended coverage.

DS means a structure in which BSSs are interconnected. Specifically, as shown in FIG. 2, a BSS may exist as an extended form of a network composed of a plurality of BSSs. DS is a logical concept and may be specified by the characteristics of Distributed System Media (DSM). In this regard, a wireless medium (WM) and a DSM may be logically separated. Each logical medium is used for a different purpose and is used by different components. These medium are not limited to being the same, nor are they limited to being different. In this way, the flexibility of the wireless LAN structure (DS structure or other network structure) may be explained in that a plurality of media are logically different. That is, the wireless LAN structure may be implemented in various ways, and the corresponding wireless LAN structure may be independently specified by the physical characteristics of each embodiment.

A DS may support a mobile device by providing seamless integration of a plurality of BSSs and providing logical services necessary to address an address to a destination. In addition, the DS may further include a component called a portal that serves as a bridge for connection between the wireless LAN and other networks (e.g., IEEE 802.X).

The AP enables access to the DS through the WM for the associated non-AP STAs, and means an entity that also has the functionality of an STA. Data movement between the BSS and the DS may be performed through the AP. For example, STA2 and STA3 shown in FIG. 2 have the functionality of STAs, and provide a function allowing the associated non-AP STAs (STA1 and STA4) to access the DS. In addition, since all APs basically correspond to STAs, all APs are addressable entities. The address used by the AP for communication on the WM and the address used by the AP for communication on the DSM are not necessarily the same. A BSS composed of an AP and one or more STAs may be referred to as an infrastructure BSS.

Data transmitted from one of the STA(s) associated with an AP to a STA address of the corresponding AP may be always received on an uncontrolled port and may be processed by an IEEE 802.1X port access entity. In addition, when a controlled port is authenticated, transmission data (or frames) may be delivered to the DS.

In addition to the structure of the DS described above, an extended service set (ESS) may be configured to provide wide coverage.

An ESS means a network in which a network having an arbitrary size and complexity is composed of DSs and BSSs. The ESS may correspond to a set of BSSs connected to one DS. However, the ESS does not include the DS. An ESS network is characterized by being seen as an IBSS in the Logical Link Control (LLC) layer. STAs included in the ESS may communicate with each other, and mobile STAs may move from one BSS to another BSS (within the same ESS) transparently to the LLC. APs included in one ESS may have the same service set identification (SSID). The SSID is distinguished from the BSSID, which is an identifier of the BSS.

The wireless LAN system does not assume anything about the relative physical locations of BSSs, and all of the following forms are possible. BSSs may partially overlap, which is a form commonly used to provide continuous coverage. In addition, BSSs may not be physically connected, and logically there is no limit on the distance between BSSs. In addition, the BSSs may be physically located in the same location, which may be used to provide redundancy. In addition, one (or more than one) IBSS or ESS networks may physically exist in the same space as one (or more than one) ESS network. When an ad-hoc network operates in a location where an ESS network exists, when physically overlapping wireless networks are configured by different organizations, or when two or more different access and security policies are required in the same location, this may correspond to the form of an ESS network in the like.

FIG. 3 is a diagram for explaining a link setup process to which the present disclosure may be applied.

In order for an STA to set up a link with respect to a network and transmit/receive data, it first discovers a network, performs authentication, establishes an association, and need to perform the authentication process for security. The link setup process may also be referred to as a session initiation process or a session setup process. In addition, the processes of discovery, authentication, association, and security setting of the link setup process may be collectively referred to as an association process.

In step S310, the STA may perform a network discovery operation. The network discovery operation may include a scanning operation of the STA. That is, in order for the STA to access the network, it needs to find a network in which it can participate. The STA shall identify a compatible network before participating in a wireless network, and the process of identifying a network existing in a specific area is called scanning.

Scanning schemes include active scanning and passive scanning. FIG. 3 exemplarily illustrates a network discovery operation including an active scanning process. In active scanning, an STA performing scanning transmits a probe request frame to discover which APs exist around it while moving channels and waits for a response thereto. A responder transmits a probe response frame as a response to the probe request frame to the STA that has transmitted the probe request frame. Here, the responder may be an STA that last transmitted a beacon frame in the BSS of the channel being scanned. In the BSS, since the AP transmits the beacon frame, the AP becomes a responder, and in the IBSS, the STAs in the IBSS rotate to transmit the beacon frame, so the responder is not constant. For example, a STA that transmits a probe request frame on channel 1 and receives a probe response frame on channel 1, may store BSS-related information included in the received probe response frame and may move to the next channel (e.g., channel 2) and perform scanning (i.e., transmission/reception of a probe request/response on channel 2) in the same manner.

Although not shown in FIG. 3, the scanning operation may be performed in a passive scanning manner. In passive scanning, a STA performing scanning waits for a beacon frame while moving channels. The beacon frame is one of the management frames defined in IEEE 802.11, and is periodically transmitted to notify the existence of a wireless network and to allow the STA performing scanning to find a wireless network and participate in the wireless network. In the BSS, the AP serves to transmit beacon frames periodically, and in the IBSS, STAs within the IBSS rotate to transmit beacon frames. When the STA performing scanning receives a beacon frame, the STA stores information for the BSS included in the beacon frame and records beacon frame information in each channel while moving to another channel. The STA receiving the beacon frame may store BSS-related information included in the received beacon frame, move to the next channel, and perform scanning in the next channel in the same way. Comparing active scanning and passive scanning, active scanning has an advantage of having less delay and less power consumption than passive scanning.

After the STA discovers the network, an authentication process may be performed in step S320. This authentication process may be referred to as a first authentication process in order to be clearly distinguished from the security setup operation of step S340 to be described later.

The authentication process includes a process in which the STA transmits an authentication request frame to the AP, and in response to this, the AP transmits an authentication response frame to the STA. An authentication frame used for authentication request/response corresponds to a management frame.

The authentication frame includes an authentication algorithm number, an authentication transaction sequence number, a status code, a challenge text, a robust security network (RSN), and a Finite Cyclic Group, etc. This corresponds to some examples of information that may be included in the authentication request/response frame, and may be replaced with other information or additional information may be further included.

The STA may transmit an authentication request frame to the AP. The AP may determine whether to allow authentication of the corresponding STA based on information included in the received authentication request frame. The AP may provide the result of the authentication process to the STA through an authentication response frame.

After the STA is successfully authenticated, an association process may be performed in step S330. The association process includes a process in which the STA transmits an association request frame to the AP, and in response, the AP transmits an association response frame to the STA.

For example, the association request frame may include information related to various capabilities, a beacon listen interval, a service set identifier (SSID), supported rates, supported channels, RSN, mobility domain, supported operating classes, Traffic Indication Map Broadcast request (TIM broadcast request), interworking service capability, etc. For example, the association response frame may include information related to various capabilities, status code, association ID (AID), supported rates, enhanced distributed channel access (EDCA) parameter set, received channel power indicator (RCPI), received signal to noise indicator (RSNI), mobility domain, timeout interval (e.g., association comeback time), overlapping BSS scan parameters, TIM broadcast response, Quality of Service (QoS) map, etc. This corresponds to some examples of information that may be included in the association request/response frame, and may be replaced with other information or additional information may be further included.

After the STA is successfully associated with the network, a security setup process may be performed in step S340. The security setup process of step S340 may be referred to as an authentication process through Robust Security Network Association (RSNA) request/response, and the authentication process of step S320 is referred to as a first authentication process, and the security setup process of step S340 may also simply be referred to as an authentication process.

The security setup process of step S340 may include, for example, a process of setting up a private key through 4-way handshaking through an Extensible Authentication Protocol over LAN (EAPOL) frame. In addition, the security setup process may be performed according to a security scheme not defined in the IEEE 802.11 standard.

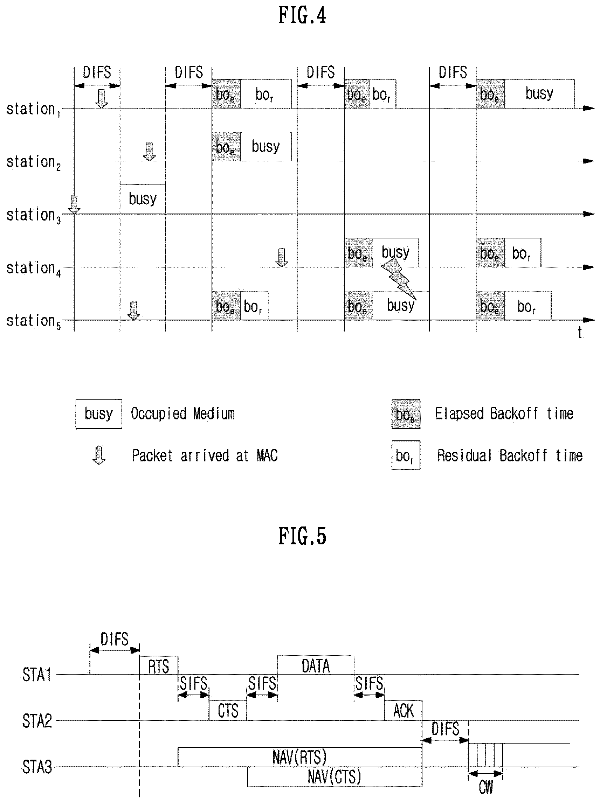

FIG. 4 is a diagram for explaining a backoff process to which the present disclosure may be applied.

In the wireless LAN system, a basic access mechanism of medium access control (MAC) is a carrier sense multiple access with collision avoidance (CSMA/CA) mechanism. The CSMA/CA mechanism is also called Distributed Coordination Function (DCF) of IEEE 802.11 MAC, and basically adopts a "listen before talk" access mechanism. According to this type of access mechanism, the AP and/or STA may perform Clear Channel Assessment (CCA) sensing a radio channel or medium during a predetermined time interval (e.g., DCF Inter-Frame Space (DIFS)), prior to starting transmission. As a result of the sensing, if it is determined that the medium is in an idle state, frame transmission is started through the corresponding medium. On the other hand, if it is detected that the medium is occupied or busy, the corresponding AP and/or STA does not start its own transmission and may set a delay period for medium access (e.g., a random backoff period) and attempt frame transmission after waiting. By applying the random backoff period, since it is expected that several STAs attempt frame transmission after waiting for different periods of time, collision may be minimized.

In addition, the IEEE 802.11 MAC protocol provides a Hybrid Coordination Function (HCF). HCF is based on the DCF and Point Coordination Function (PCF). PCF is a polling-based synchronous access method and refers to a method in which all receiving APs and/or STAs periodically poll to receive data frames. In addition, HCF has Enhanced Distributed Channel Access (EDCA) and HCF Controlled Channel Access (HCCA). EDCA is a contention-based access method for a provider to provide data frames to multiple users, and HCCA uses a non-contention-based channel access method using a polling mechanism. In addition, the HCF includes a medium access mechanism for improving QoS (Quality of Service) of the wireless LAN, and may transmit QoS data in both a Contention Period (CP) and a Contention Free Period (CFP).

Referring to FIG. 4, an operation based on a random backoff period will be described. When the occupied/busy medium changes to an idle state, several STAs may attempt to transmit data (or frames). As a method for minimizing collisions, each of STAs may respectively select a random backoff count and attempt transmission after waiting for a corresponding slot time. The random backoff count has a pseudo-random integer value and may be determined as one of values ranging from 0 to CW. Here, CW is a contention window parameter value. The CW parameter is given CWmin as an initial value, but may take a value twice as large in case of transmission failure (e.g., when an ACK for the transmitted frame is not received). When the CW parameter value reaches CWmax, data transmission may be attempted while maintaining the CWmax value until data transmission is successful, and when data transmission is successful, the CWmin value is reset. The values of CW, CWmin and CWmax are preferably set to 2ⁿ-1 (n = 0, 1, 2, ...).

When the random backoff process starts, the STA continuously monitors the medium while counting down the backoff slots according to the determined backoff count value. When the medium is monitored for occupancy, it stops counting down and waits, and resumes the rest of the countdown when the medium becomes idle.

In the example of FIG. 4, when a packet to be transmitted arrives at the MAC of STA3, STA3 may transmit the frame immediately after confirming that the medium is idle as much as DIFS. The remaining STAs monitor and wait for the medium to be occupied/busy. In the meantime, data to be transmitted may also occur in each of STA1, STA2, and STA5, and each STA waits as long as DIFS when the medium is monitored as idle, and then may perform a countdown of the backoff slot according to the random backoff count value selected by each STA. Assume that STA2 selects the smallest backoff count value and STA1 selects the largest backoff count value. That is, the case where the remaining back-off time of STA5 is shorter than the remaining back-off time of STA1 at the time when STA2 completes the back-off count and starts frame transmission is exemplified. STA1 and STA5 temporarily stop counting down and wait while STA2 occupies the medium. When the occupation of STA2 ends and the medium becomes idle again, STA1 and STA5 wait for DIFS and resume the stopped backoff count. That is, frame transmission may be started after counting down the remaining backoff slots for the remaining backoff time. Since the remaining backoff time of STA5 is shorter than that of STA1, STA5 starts frame transmission. While STA2 occupies the medium, data to be transmitted may also occur in STA4. From the standpoint of STA4, when the medium becomes idle, STA4 may wait for DIFS, and then may perform a countdown according to the random backoff count value selected by the STA4 and start transmitting frames. The example of FIG. 4 shows a case where the remaining backoff time of STA5 coincides with the random backoff count value of STA4 by chance. In this case, a collision may occur between STA4 and STA5. When a collision occurs, both STA4 and STA5 do not receive an ACK, so data transmission fails. In this case, STA4 and STA5 may double the CW value, select a random backoff count value, and perform a countdown. STA1 waits while the medium is occupied due to transmission of STA4 and STA5, waits for DIFS when the medium becomes idle, and then starts frame transmission after the remaining backoff time has elapsed.

As in the example of FIG. 4, the data frame is a frame used for transmission of data forwarded to a higher layer, and may be transmitted after a backoff performed after DIFS elapses from when the medium becomes idle. Additionally, the management frame is a frame used for exchange of management information that is not forwarded to a higher layer, and is transmitted after a backoff performed after an IFS such as DIFS or Point Coordination Function IFS (PIFS). As a subtype frames of management frame, there are a Beacon, an association request/response, a re-association request/response, a probe request/response, an authentication request/response, etc. A control frame is a frame used to control access to a medium. As a subtype frames of control frame, there are Request-To-Send (RTS), Clear-To-Send (CTS), Acknowledgement (ACK), Power Save-Poll (PS-Poll), block ACK (BlockAck), block ACK request (BlockACKReq), null data packet announcement (NDP announcement), and trigger, etc. If the control frame is not a response frame of the previous frame, it is transmitted after backoff performed after DIFS elapses, and if it is a response frame of the previous frame, it is transmitted without performing backoff after short IFS (SIFS) elapses. The type and subtype of the frame may be identified by a type field and a subtype field in a frame control (FC) field.

A Quality of Service (QoS) STA may perform the backoff that is performed after an arbitration IFS (AIFS) for an access category (AC) to which the frame belongs, that is, AIFS[i] (where i is a value determined by AC), and then may transmit the frame. Here, the frame in which AIFS[i] can be used may be a data frame, a management frame, or a control frame other than a response frame.

FIG. 5 is a diagram for explaining a frame transmission operation based on CSMA/CA to which the present disclosure may be applied.

As described above, the CSMA/CA mechanism includes virtual carrier sensing in addition to physical carrier sensing in which a STA directly senses a medium. Virtual carrier sensing is intended to compensate for problems that may occur in medium access, such as a hidden node problem. For virtual carrier sensing, the MAC of the STA may use a Network Allocation Vector (NAV). The NAV is a value indicating, to other STAs, the remaining time until the medium is available for use by an STA currently using or having the right to use the medium. Therefore, the value set as NAV corresponds to a period in which the medium is scheduled to be used by the STA transmitting the frame, and the STA receiving the NAV value is prohibited from accessing the medium during the corresponding period. For example, the NAV may be configured based on the value of the "duration" field of the MAC header of the frame.

In the example of FIG. 5, it is assumed that a STA1 intends to transmit data to a STA2, and a STA3 is in a position capable of overhearing some or all of frames transmitted and received between the STA1 and the STA2.

In order to reduce the possibility of collision of transmissions of multiple STAs in CSMA/CA based frame transmission operation, a mechanism using RTS/CTS frames may be applied. In the example of FIG. 5, while transmission of the STA1 is being performed, as a result of carrier sensing of the STA3, it may be determined that the medium is in an idle state. That is, the STA1 may correspond to a hidden node to the STA3. Alternatively, in the example of FIG. 5, it may be determined that the carrier sensing result medium of the STA3 is in an idle state while transmission of the STA2 is being performed. That is, the STA2 may correspond to a hidden node to the STA3. Through the exchange of RTS / CTS frames before performing data transmission and reception between the STA1 and the STA2, a STA outside the transmission range of one of the STA1 or the STA2, or a STA outside the carrier sensing range for transmission from the STA1 or the STA3 may not attempt to occupy the channel during data transmission and reception between the STA1 and the STA2.

Specifically, the STA1 may determine whether a channel is being used through carrier sensing. In terms of physical carrier sensing, the STA1 may determine a channel occupation idle state based on an energy level or signal correlation detected in a channel. In addition, in terms of virtual carrier sensing, the STA1 may determine a channel occupancy state using a network allocation vector (NAV) timer.

The STA1 may transmit an RTS frame to the STA2 after performing a backoff when the channel is in an idle state during DIFS. When the STA2 receives the RTS frame, the STA2 may transmit a CTS frame as a response to the RTS frame to the STA1 after SIFS.

If the STA3 cannot overhear the CTS frame from the STA2 but can overhear the RTS frame from the STA1, the STA3 may set a NAV timer for a frame transmission period (e.g., SIFS + CTS frame + SIFS + data frame + SIFS + ACK frame) that is continuously transmitted thereafter, using the duration information included in the RTS frame. Alternatively, if the STA3 can overhear a CTS frame from the STA2 although the STA3 cannot overhear an RTS frame from the STA1, the STA3 may set a NAV timer for a frame transmission period (e.g., SIFS + data frame + SIFS + ACK frame) that is continuously transmitted thereafter, using the duration information included in the CTS frame. That is, if the STA3 can overhear one or more of the RTS or CTS frames from one or more of the STA1 or the STA2, the STA3 may set the NAV accordingly. When the STA3 receives a new frame before the NAV timer expires, the STA3 may update the NAV timer using duration information included in the new frame. The STA3 does not attempt channel access until the NAV timer expires.

When the STA1 receives the CTS frame from the STA2, the STA1 may transmit the data frame to the STA2 after SIFS from the time point when the reception of the CTS frame is completed. When the STA2 successfully receives the data frame, the STA2 may transmit an ACK frame as a response to the data frame to the STA1 after SIFS. The STA3 may determine whether the channel is being used through carrier sensing when the NAV timer expires. When the STA3 determines that the channel is not used by other terminals during DIFS after expiration of the NAV timer, the STA3 may attempt channel access after a contention window (CW) according to a random backoff has passed.

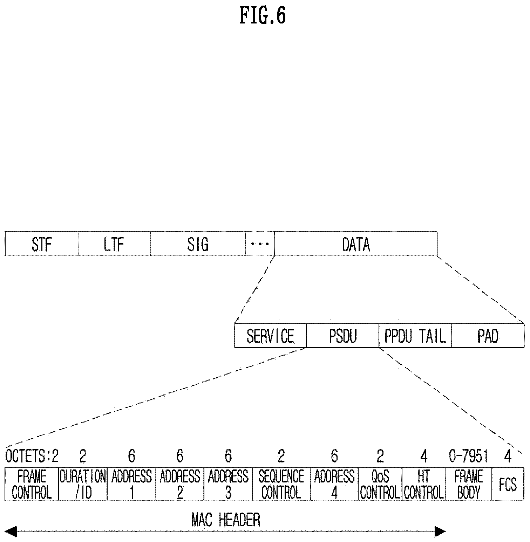

FIG. 6 is a diagram for explaining an example of a frame structure used in a WLAN system to which the present disclosure may be applied.

By means of an instruction or primitive (meaning a set of instructions or parameters) from the MAC layer, the PHY layer may prepare a MAC PDU (MPDU) to be transmitted. For example, when a command requesting transmission start of the PHY layer is received from the MAC layer, the PHY layer switches to the transmission mode and configures information (e.g., data) provided from the MAC layer in the form of a frame and transmits it. In addition, when the PHY layer detects a valid preamble of the received frame, the PHY layer monitors the header of the preamble and sends a command notifying the start of reception of the PHY layer to the MAC layer.

In this way, information transmission/reception in a wireless LAN system is performed in the form of a frame, and for this purpose, a PHY layer protocol data unit (PPDU) frame format is defined.

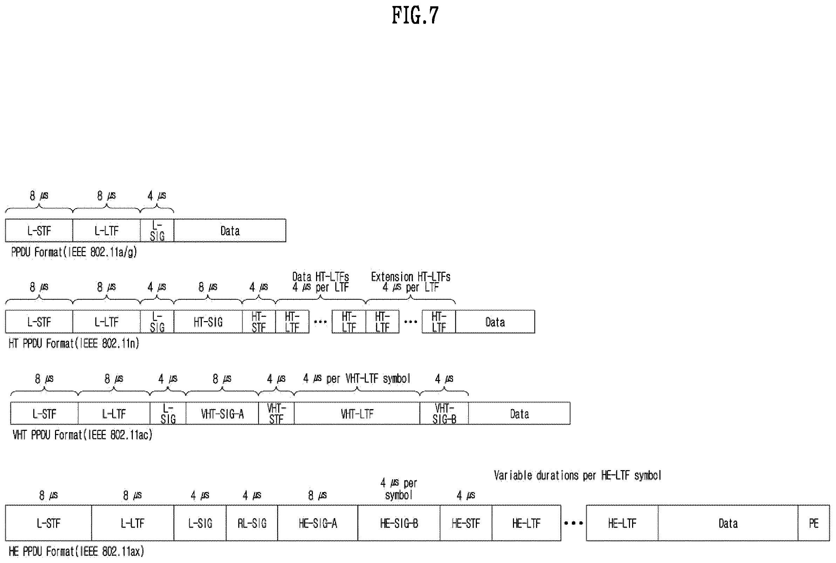

A basic PPDU frame may include a Short Training Field (STF), a Long Training Field (LTF), a SIGNAL (SIG) field, and a Data field. The most basic (e.g., non-High Throughput (HT)) PPDU frame format may consist of only L-STF (Legacy-STF), L-LTF (Legacy-LTF), SIG field, and data field. In addition, depending on the type of PPDU frame format (e.g., HT-mixed format PPDU, HT-greenfield format PPDU, VHT (Very High Throughput) PPDU, etc.), an additional (or different type) STF, LTF, and SIG fields may be included between the SIG field and the data field (this will be described later with reference to FIG. 7).

The STF is a signal for signal detection, automatic gain control (AGC), diversity selection, precise time synchronization, and the like, and the LTF is a signal for channel estimation and frequency error estimation. The STF and LTF may be referred to as signals for synchronization and channel estimation of the OFDM physical layer.

The SIG field may include a RATE field and a LENGTH field. The RATE field may include information on modulation and coding rates of data. The LENGTH field may include information on the length of data. Additionally, the SIG field may include a parity bit, a SIG TAIL bit, and the like.

The data field may include a SERVICE field, a physical layer service data unit (PSDU), and a PPDU TAIL bit, and may also include padding bits if necessary. Some bits of the SERVICE field may be used for synchronization of the descrambler at the receiving end. The PSDU corresponds to the MAC PDU defined in the MAC layer, and may include data generated/used in the upper layer. The PPDU TAIL bit may be used to return the encoder to a 0 state. Padding bits may be used to adjust the length of a data field in a predetermined unit.

A MAC PDU is defined according to various MAC frame formats, and a basic MAC frame consists of a MAC header, a frame body, and a Frame Check Sequence (FCS). The MAC frame may consist of MAC PDUs and be transmitted/received through the PSDU of the data part of the PPDU frame format.

The MAC header includes a Frame Control field, a Duration/ID field, an Address field, and the like. The frame control field may include control information required for frame transmission/reception. The duration/ID field may be set to a time for transmitting a corresponding frame or the like. For details of the Sequence Control, QoS Control, and HT Control subfields of the MAC header, refer to the IEEE 802.11 standard document.

A null-data packet (NDP) frame format means a frame format that does not include a data packet. That is, the NDP frame refers to a frame format that includes a physical layer convergence procedure (PLCP) header part (i.e., STF, LTF, and SIG fields) in a general PPDU frame format and does not include the remaining parts (i.e., data field). A NDP frame may also be referred to as a short frame format.

FIG. 7 is a diagram illustrating examples of PPDUs defined in the IEEE 802.11 standard to which the present disclosure may be applied.

In standards such as IEEE 802.11a/g/n/ac/ax, various types of PPDUs have been used. The basic PPDU format (IEEE 802.11a/g) includes L-LTF, L-STF, L-SIG and Data fields. The basic PPDU format may also be referred to as a non-HT PPDU format.

The HT PPDU format (IEEE 802.11n) additionally includes HT-SIG, HT-STF, and HT-LFT(s) fields to the basic PPDU format. The HT PPDU format shown in FIG. 7 may be referred to as an HT-mixed format. In addition, an HT-greenfield format PPDU may be defined, and this corresponds to a format consisting of HT-GF-STF, HT-LTF1, HT-SIG, one or more HT-LTF, and Data field, not including L-STF, L-LTF, and L-SIG (not shown).

An example of the VHT PPDU format (IEEE 802.11ac) additionally includes VHT SIG-A, VHT-STF, VHT-LTF, and VHT-SIG-B fields to the basic PPDU format.

An example of the HE PPDU format (IEEE 802.11ax) additionally includes Repeated L-SIG (RL-SIG), HE-SIG-A, HE-SIG-B, HE-STF, HE-LTF(s), Packet Extension (PE) field to the basic PPDU format. Some fields may be excluded or their length may vary according to detailed examples of the HE PPDU format. For example, the HE-SIG-B field is included in the HE PPDU format for multi-user (MU), and the HE-SIG-B is not included in the HE PPDU format for single user (SU). In addition, the HE trigger-based (TB) PPDU format does not include the HE-SIG-B, and the length of the HE-STF field may vary to 8 us. The Extended Range (HE ER) SU PPDU format does not include the HE-SIG-B field, and the length of the HE-SIG-A field may vary to 16us.

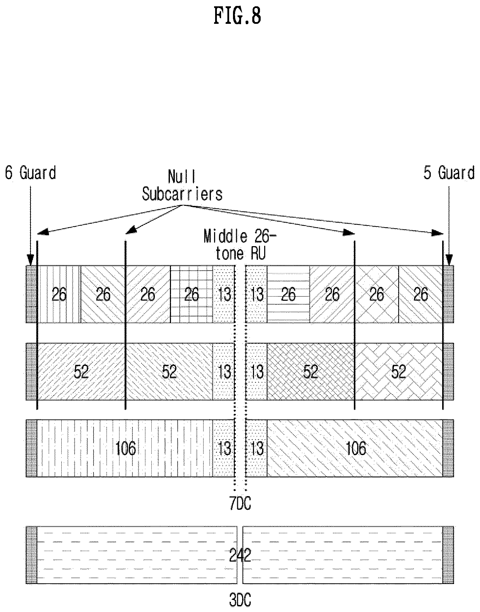

FIGs. 8 to 10 are diagrams for explaining examples of resource units of a WLAN system to which the present disclosure may be applied.

Referring to FIGS. 8 to 10, a resource unit (RU) defined in a wireless LAN system will be described. the RU may include a plurality of subcarriers (or tones). The RU may be used when transmitting signals to multiple STAs based on the OFDMA scheme. In addition, the RU may be defined even when a signal is transmitted to one STA. The RU may be used for STF, LTF, data field of the PPDU, etc.

As shown in FIGS. 8 to 10, RUs corresponding to different numbers of tones (i.e., subcarriers) are used to construct some fields of 20 MHz, 40 MHz, or 80 MHz X-PPDUs (X is HE, EHT, etc.). For example, resources may be allocated in RU units shown for the X-STF, X-LTF, and Data field.

FIG. 8 is a diagram illustrating an exemplary allocation of resource units (RUs) used on a 20 MHz band.

As shown at the top of FIG. 8, 26-units (i.e., units corresponding to 26 tones) may be allocated. 6 tones may be used as a guard band in the leftmost band of the 20 MHz band, and 5 tones may be used as a guard band in the rightmost band of the 20 MHz band. In addition, 7 DC tones are inserted in the center band, that is, the DC band, and 26-units corresponding to each of the 13 tones may exist on the left and right sides of the DC band. In addition, 26-unit, 52-unit, and 106-unit may be allocated to other bands. Each unit may be allocated for STAs or users.

The RU allocation of FIG. 8 is utilized not only in a situation for multiple users (MU) but also in a situation for a single user (SU), and in this case, it is possible to use one 242-unit as shown at the bottom of FIG. 8. In this case, three DC tones may be inserted.

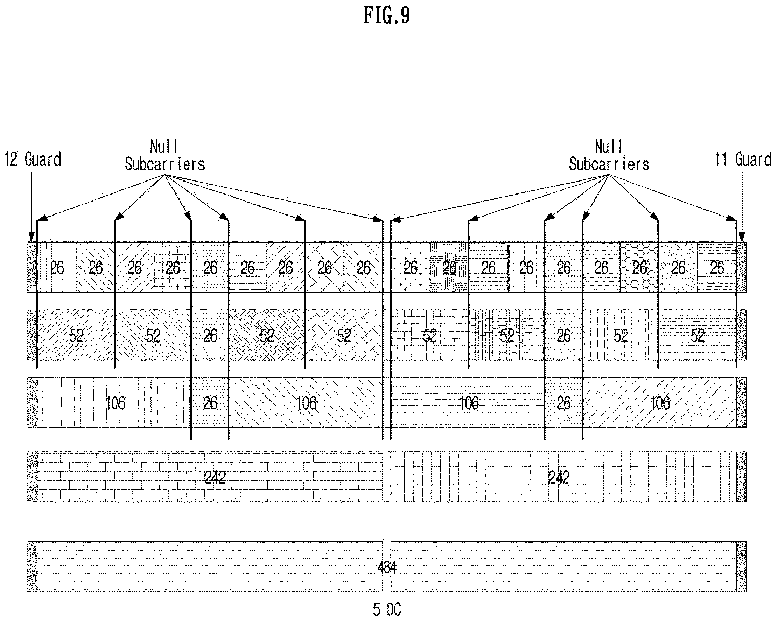

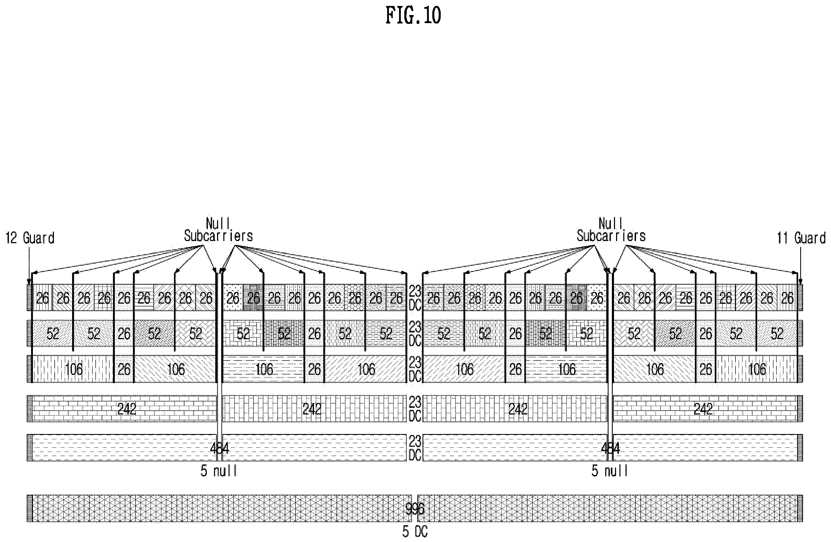

In the example of FIG. 8, RUs of various sizes, that is, 26-RU, 52-RU, 106-RU, 242-RU, etc. are exemplified, but the specific size of these RUs may be reduced or expanded. Therefore, in the present disclosure, the specific size of each RU (i.e., the number of corresponding tones) is exemplary and not restrictive. In addition, within a predetermined bandwidth (e.g., 20, 40, 80, 160, 320 MHz, ...) in the present disclosure, the number of RUs may vary according to the size of the RU. In the examples of FIG. 9 and/or FIG. 10 to be described below, the fact that the size and/or number of RUs may be varied is the same as the example of FIG. 8 .

FIG. 9 is a diagram illustrating an exemplary allocation of resource units (RUs) used on a 40 MHz band.

Just as RUs of various sizes are used in the example of FIG. 8, 26-RU, 52-RU, 106-RU, 242-RU, 484-RU, and the like may be used in the example of FIG. 9 as well. In addition, 5 DC tones may be inserted at the center frequency, 12 tones may be used as a guard band in the leftmost band of the 40MHz band, and 11 tones may be used as a guard band in the rightmost band of the 40MHz band.

In addition, as shown, when used for a single user, a 484-RU may be used.

FIG. 10 is a diagram illustrating an exemplary allocation of resource units (RUs) used on an 80 MHz band.

Just as RUs of various sizes are used in the example of FIG. 8 and FIG. 9, 26-RU, 52-RU, 106-RU, 242-RU, 484-RU, 996-RU and the like may be used in the example of FIG. 10 as well. In addition, in the case of an 80 MHz PPDU, RU allocation of HE PPDUs and EHT PPDUs may be different, and the example of FIG. 10 shows an example of RU allocation for 80 MHz EHT PPDUs. The scheme that 12 tones are used as a guard band in the leftmost band of the 80 MHz band and 11 tones are used as a guard band in the rightmost band of the 80 MHz band in the example of FIG. 10 is the same in HE PPDU and EHT PPDU. Unlike HE PPDU, where 7 DC tones are inserted in the DC band and there is one 26-RU corresponding to each of the 13 tones on the left and right sides of the DC band, in the EHT PPDU, 23 DC tones are inserted into the DC band, and one 26-RU exists on the left and right sides of the DC band. Unlike the HE PPDU, where one null subcarrier exists between 242-RUs rather than the center band, there are five null subcarriers in the EHT PPDU. In the HE PPDU, one 484-RU does not include null subcarriers, but in the EHT PPDU, one 484-RU includes 5 null subcarriers.

In addition, as shown, when used for a single user, 996-RU may be used, and in this case, 5 DC tones are inserted in common with HE PPDU and EHT PPDU.

EHT PPDUs over 160 MHz may be configured with a plurality of 80 MHz subblocks in FIG. 10. The RU allocation for each 80 MHz subblock may be the same as that of the 80 MHz EHT PPDU of FIG. 10. If the 80 MHz subblock of the 160 MHz or 320 MHz EHT PPDU is not punctured and the entire 80 MHz subblock is used as part of RU or multiple RU (MRU), the 80 MHz subblock may use 996-RU of FIG. 10.

Here, the MRU corresponds to a group of subcarriers (or tones) composed of a plurality of RUs, and the plurality of RUs constituting the MRU may be RUs having the same size or RUs having different sizes. For example, a single MRU may be defined as 52+26-tone, 106+26-tone, 484+242-tone, 996+484-tone, 996+484+242-tone, 2X996+484-tone, 3X996-tone, or 3X996+484-tone. Here, the plurality of RUs constituting one MRU may correspond to small size (e.g., 26, 52, or 106) RUs or large size (e.g., 242, 484, or 996) RUs. That is, one MRU including a small size RU and a large size RU may not be configured/defined. In addition, a plurality of RUs constituting one MRU may or may not be consecutive in the frequency domain.

When an 80 MHz subblock includes RUs smaller than 996 tones, or parts of the 80 MHz subblock are punctured, the 80 MHz subblock may use RU allocation other than the 996-tone RU.

The RU of the present disclosure may be used for uplink (UL) and/or downlink (DL) communication. For example, when trigger-based UL-MU communication is performed, the STA transmitting the trigger (e.g., AP) may allocate a first RU (e.g., 26/52/106/242-RU, etc.) to a first STA and allocate a second RU (e.g., 26/52/106/242-RU, etc.) to a second STA, through trigger information (e.g., trigger frame or triggered response scheduling (TRS)). Thereafter, the first STA may transmit a first trigger-based (TB) PPDU based on the first RU, and the second STA may transmit a second TB PPDU based on the second RU. The first/second TB PPDUs may be transmitted to the AP in the same time period.

For example, when a DL MU PPDU is configured, the STA transmitting the DL MU PPDU (e.g., AP) may allocate a first RU (e.g., 26/52/106/242-RU, etc.) to a first STA and allocate a second RU (e.g., 26/52/106/242-RU, etc.) to a second STA. That is, the transmitting STA (e.g., AP) may transmit the HE-STF, HE-LTF, and Data fields for the first STA through the first RU within one MU PPDU, and may transmit the HE-STF, HE-LTF, and Data fields for the second STA through the second RU.

Information on the allocation of RUs may be signaled through HE-SIG-B in the HE PPDU format.

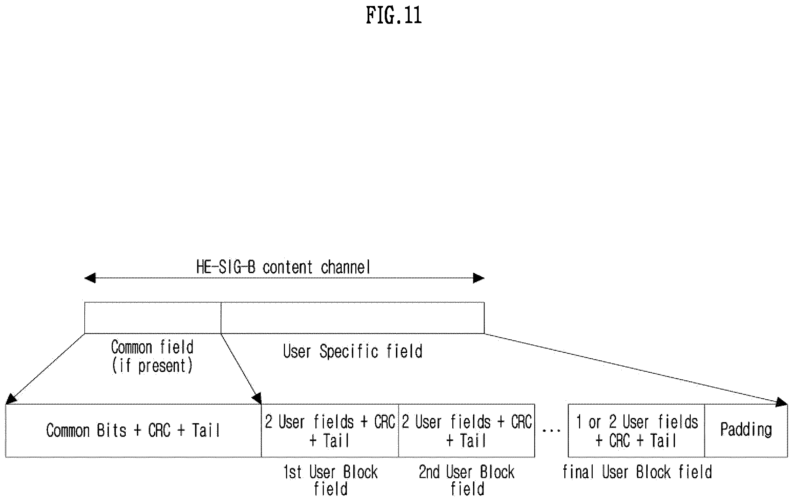

FIG. 11 illustrates an example structure of a HE-SIG-B field.

As shown, the HE-SIG-B field may include a common field and a user-specific field. If HE-SIG-B compression is applied (e.g., full-bandwidth MU-MIMO transmission), the common field may not be included in HE-SIG-B, and the HE-SIG-B content channel may include only a user-specific field. If HE-SIG-B compression is not applied, the common field may be included in HE-SIG-B.

The common field may include information on RU allocation (e.g., RU assignment, RUs allocated for MU-MIMO, the number of MU-MIMO users (STAs), etc.)

The common field may include N*8 RU allocation subfields. Here, N is the number of subfields, N = 1 in the case of 20 or 40 MHz MU PPDU, N = 2 in the case of 80 MHz MU PPDU, N = 4 in the case of 160 MHz or 80 + 80 MHz MU PPDU, etc. One 8-bit RU allocation subfield may indicate the size (26, 52, 106, etc.) and frequency location (or RU index) of RUs included in the 20 MHz band.

For example, if a value of the 8-bit RU allocation subfield is 00000000, it may indicate that nine 26-RUs are sequentially allocated in order from the leftmost to the rightmost in the example of FIG. 8, if the value is 00000001, it may indicate that seven 26-RUs and one 52-RU are sequentially allocated in order from leftmost to rightest, and if the value is 00000010, it may indicate that five 26-RUs, one 52-RU, and two 26-RUs are sequentially allocated from the leftmost side to the rightmost side.

As an additional example, if the value of the 8-bit RU allocation subfield is 01000y2yly0, it may indicate that one 106-RU and five 26-RUs are sequentially allocated from the leftmost to the rightmost in the example of FIG. 8. In this case, multiple users/STAs may be allocated to the 106-RU in the MU-MIMO scheme. Specifically, up to 8 users/STAs may be allocated to the 106-RU, and the number of users/STAs allocated to the 106-RU is determined based on 3-bit information (i.e., y2y1y0). For example, when the 3-bit information (y2y1y0) corresponds to a decimal value N, the number of users/STAs allocated to the 106-RU may be N+1.

Basically, one user/STA may be allocated to each of a plurality of RUs, and different users/STAs may be allocated to different RUs. For RUs larger than a predetermined size (e.g., 106, 242, 484, 996-tones, ...), a plurality of users/STAs may be allocated to one RU, and MU-MIMO scheme may be applied for the plurality of users/STAs.

The set of user-specific fields includes information on how all users (STAs) of the corresponding PPDU decode their payloads. User-specific fields may contain zero or more user block fields. The non-final user block field includes two user fields (i.e., information to be used for decoding in two STAs). The final user block field contains one or two user fields. The number of user fields may be indicated by the RU allocation subfield of HE-SIG-B, the number of symbols of HE-SIG-B, or the MU-MIMO user field of HE-SIG-A. A User-specific field may be encoded separately from or independently of a common field.

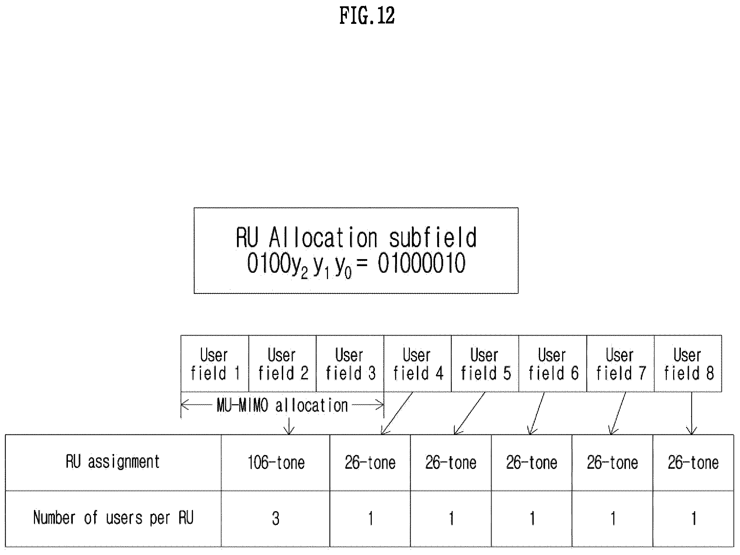

FIG. 12 is a diagram for explaining a MU-MIMO method in which a plurality of users/STAs are allocated to one RU.

In the example of FIG. 12, it is assumed that the value of the RU allocation subfield is 01000010. This corresponds to the case where y2y1y0 = 010 in 01000y2y1y0. 010 corresponds to 2 in decimal (i.e., N=2) and may indicate that 3 (=N+1) users are allocated to one RU. In this case, one 106-RU and five 26-RUs may be sequentially allocated from the leftmost side to the rightmost side of a specific 20 MHz band/channel. Three users/STAs may be allocated to the 106-RU in a MU-MIMO manner. As a result, a total of 8 users/STAs are allocated to the 20 MHz band/channel, and the user-specific field of HE-SIG-B may include 8 user fields (i.e., 4 user block fields). Eight user fields may be assigned to RUs as shown in FIG. 12.

The user field may be constructed based on two formats. The user field for a MU-MIMO allocation may be constructed with a first format, and the user field for non-MU-MIMO allocation may be constructed with a second format. Referring to the example of FIG. 12, user fields 1 to 3 may be based on the first format, and user fields 4 to 8 may be based on the second format. The first format and the second format may contain bit information of the same length (e.g., 21 bits).

The user field of the first format (i.e., format for MU-MIMO allocation) may be constructed as follows. For example, out of all 21 bits of one user field, B0-B10 includes the user's identification information (e.g., STA-ID, AID, partial AID, etc.), B11-14 includes spatial configuration information such as the number of spatial streams for the corresponding user, B15-B18 includes Modulation and Coding Scheme (MCS) information applied to the Data field of the corresponding PPDU, B19 is defined as a reserved field, and B20 may include information on a coding type (e.g., binary convolutional coding (BCC) or low-density parity check (LDPC)) applied to the Data field of the corresponding PPDU.

The user field of the second format (i.e., the format for non-MU-MIMO allocation) may be constructed as follows. For example, out of all 21 bits of one user field, B0-B10 includes the user's identification information (e.g., STA-ID, AID, partial AID, etc.), B11-13 includes information on the number of spatial streams (NSTS) applied to the corresponding RU, B14 includes information indicating whether beamforming is performed (or whether a beamforming steering matrix is applied), B15-B18 includes Modulation and Coding Scheme (MCS) information applied to the Data field of the corresponding PPDU, B19 includes information indicating whether DCM (dual carrier modulation) is applied, and B20 may include information on a coding type (e.g., BCC or LDPC) applied to the Data field of the corresponding PPDU.

MCS, MCS information, MCS index, MCS field, and the like used in the present disclosure may be indicated by a specific index value. For example, MCS information may be indicated as index 0 to index 11. MCS information includes information on constellation modulation type (e.g., BPSK, QPSK, 16-QAM, 64-QAM, 256-QAM, 1024-QAM, etc.), and coding rate (e.g., 1/2, 2/ 3, 3/4, 5/6, etc.). Information on a channel coding type (e.g., BCC or LDPC) may be excluded from the MCS information.

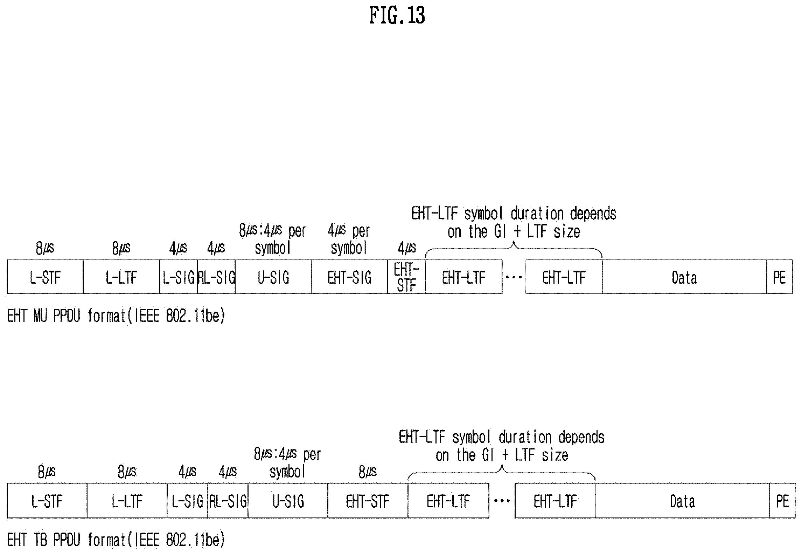

FIG. 13 illustrates an example of a PPDU format to which the present disclosure may be applied.

The PPDU of FIG. 13 may be referred as various names such as an EHT PPDU, a transmitted PPDU, a received PPDU, a first type or an Nth type PPDU. For example, the PPDU or EHT PPDU of the present disclosure may be referred as various names such as a transmission PPDU, a reception PPDU, a first type or an Nth type PPDU. In addition, the EHT PPU may be used in an EHT system and/or a new wireless LAN system in which the EHT system is improved.

The EHT MU PPDU of FIG. 13 corresponds to a PPDU carrying one or more data (or PSDUs) for one or more users. That is, the EHT MU PPDU may be used for both SU transmission and MU transmission. For example, the EHT MU PPDU may correspond to a PPDU for one receiving STA or a plurality of receiving STAs.

In the EHT TB PPDU of FIG. 13, the EHT-SIG is omitted compared to the EHT MU PPDU. Upon receiving a trigger for UL MU transmission (e.g., a trigger frame or TRS), the STA may perform UL transmission based on the EHT TB PPDU format.

In the example of the EHT PPDU format of FIG. 13, L-STF to EHT-LTF correspond to a preamble or a physical preamble, and may be generated/transmitted/received/acquired/decoded in the physical layer.

A Subcarrier frequency spacing of L-STF, L-LTF, L-SIG, RL-SIG, Universal SIGNAL (U-SIG), EHT-SIG field (these are referred to as pre-EHT modulated fields) may be set to 312.5 kHz. A subcarrier frequency spacing of the EHT-STF, EHT-LTF, Data, and PE field (these are referred to as EHT modulated fields) may be set to 78.125 kHz. That is, the tone/subcarrier index of L-STF, L-LTF, L-SIG, RL-SIG, U-SIG, and EHT-SIG field may be indicated in units of 312.5 kHz, and the tone/subcarrier index of EHT-STF, EHT-LTF, Data, and PE field may be indicated in units of 78.125 kHz.

The L-LTF and L-STF of FIG. 13 may be constructed identically to the corresponding fields of the PPDU described in FIGS. 6 to 7.

The L-SIG field of FIG. 13 may be constructed with 24 bits and may be used to communicate rate and length information. For example, the L-SIG field includes a 4-bit Rate field, a 1-bit Reserved bit, a 12-bit Length field, a 1-bit Parity field, and a 6-bit Tail field may be included. For example, the 12-bit Length field may include information on a time duration or a length of the PPDU. For example, a value of the 12-bit Length field may be determined based on the type of PPDU. For example, for a non-HT, HT, VHT, or EHT PPDU, the value of the Length field may be determined as a multiple of 3. For example, for the HE PPDU, the value of the Length field may be determined as a multiple of 3 + 1 or a multiple of 3 + 2.

For example, the transmitting STA may apply BCC encoding based on a coding rate of 1/2 to 24-bit information of the L-SIG field. Thereafter, the transmitting STA may obtain 48-bit BCC coded bits. BPSK modulation may be applied to 48-bit coded bits to generate 48 BPSK symbols. The transmitting STA may map 48 BPSK symbols to any location except for a pilot subcarrier (e.g., {subcarrier index -21, -7, +7, +21}) and a DC subcarrier (e.g., {subcarrier index 0}). As a result, 48 BPSK symbols may be mapped to subcarrier indices -26 to -22, - 20 to -8, -6 to -1, +1 to +6, +8 to +20, and +22 to +26. The transmitting STA may additionally map the signals of {-1, -1, -1, 1} to the subcarrier index {-28, -27, +27, +28}. The above signal may be used for channel estimation in the frequency domain corresponding to {-28, -27, +27, +28}.

The transmitting STA may construct RL-SIG which is constructed identically to L-SIG. For RL-SIG, BPSK modulation is applied. The receiving STA may recognize that the received PPDU is a HE PPDU or an EHT PPDU based on the existence of the RL-SIG.

After the RL-SIG of FIG. 13, a Universal SIG (U-SIG) may be inserted. The U-SIG may be referred as various names such as a first SIG field, a first SIG, a first type SIG, a control signal, a control signal field, and a first (type) control signal, etc.

The U-SIG may include N-bit information and may include information for identifying the type of EHT PPDU. For example, U-SIG may be configured based on two symbols (e.g., two consecutive OFDM symbols). Each symbol (e.g., OFDM symbol) for the U-SIG may have a duration of 4us, and the U-SIG may have a total 8us duration. Each symbol of the U-SIG may be used to transmit 26 bit information. For example, each symbol of the U-SIG may be transmitted and received based on 52 data tones and 4 pilot tones.

Through the U-SIG (or U-SIG field), for example, A bit information (e.g., 52 un-coded bits) may be transmitted, the first symbol of the U-SIG (e.g., U-SIG-1) may transmit the first X bit information (e.g., 26 un-coded bits) of the total A bit information, and the second symbol of the U-SIG (e.g., U-SIG-2) may transmit the remaining Y-bit information (e.g., 26 un-coded bits) of the total A-bit information. For example, the transmitting STA may obtain 26 un-coded bits included in each U-SIG symbol. The transmitting STA may generate 52-coded bits by performing convolutional encoding (e.g., BCC encoding) based on a rate of R = 1/2, and perform interleaving on the 52-coded bits. The transmitting STA may generate 52 BPSK symbols allocated to each U-SIG symbol by performing BPSK modulation on the interleaved 52-coded bits. One U-SIG symbol may be transmitted based on 56 tones (subcarriers) from subcarrier index -28 to subcarrier index +28, except for DC index 0. The 52 BPSK symbols generated by the transmitting STA may be transmitted based on the remaining tones (subcarriers) excluding pilot tones -21, -7, +7, and +21 tones.

For example, the A bit information (e.g., 52 un-coded bits) transmitted by the U-SIG includes a CRC field (e.g., a 4-bit field) and a tail field (e.g., 6 bit-length field). The CRC field and the tail field may be transmitted through the second symbol of the U-SIG. The CRC field may be constructed based on 26 bits allocated to the first symbol of U-SIG and 16 bits remaining except for the CRC/tail field in the second symbol, and may be constructed based on a conventional CRC calculation algorithm. In addition, the tail field may be used to terminate the trellis of the convolution decoder, and for example, the tail field may be set to 0.

A bit information (e.g., 52 un-coded bits) transmitted by the U-SIG (or U-SIG field) may be divided into version-independent bits and version-independent bits. For example, a size of the version-independent bits may be fixed or variable. For example, the version-independent bits may be allocated only to the first symbol of U-SIG, or the version-independent bits may be allocated to both the first symbol and the second symbol of U-SIG. For example, the version-independent bits and the version-dependent bits may be referred as various names such as a first control bit and a second control bit, etc.

For example, the version-independent bits of the U-SIG may include a 3-bit physical layer version identifier (PHY version identifier). For example, the 3-bit PHY version identifier may include information related to the PHY version of the transmitted/received PPDU. For example, the first value of the 3-bit PHY version identifier may indicate that the transmission/reception PPDU is an EHT PPDU. In other words, when transmitting the EHT PPDU, the transmitting STA may set the 3-bit PHY version identifier to a first value. In other words, the receiving STA may determine that the received PPDU is an EHT PPDU based on the PHY version identifier having the first value.

For example, the version-independent bits of U-SIG may include a 1-bit UL/DL flag field. A first value of the 1-bit UL/DL flag field is related to UL communication, and a second value of the UL/DL flag field is related to DL communication.

For example, the version-independent bits of the U-SIG may include information on the length of a transmission opportunity (TXOP) and information on a BSS color ID.

For example, if the EHT PPDU is classified into various types (e.g., EHT PPDU related to SU mode, EHT PPDU related to MU mode, EHT PPDU related to TB mode, EHT PPDU related to Extended Range transmission, etc.), information on the type of EHT PPDU may be included in the version-dependent bits of the U-SIG.

For example, the U-SIG may include information on 1) a bandwidth field containing information on a bandwidth, 2) a field containing information on a MCS scheme applied to EHT-SIG, 3) an indication field containing information related to whether the DCM technique is applied to the EHT-SIG, 4) a field containing information on the number of symbols used for EHT-SIG, 5) a field containing information on whether EHT-SIG is constructed over all bands, 6) a field containing information on the type of EHT-LTF/STF, and 7) a field indicating the length of EHT-LTF and CP length.

Preamble puncturing may be applied to the PPDU of FIG. 13. Preamble puncturing may mean transmission of a PPDU in which no signal is present in one or more 20 MHz subchannels among the bandwidth of the PPDU. Preamble puncturing may be applied to a PPDU transmitted to one or more users. For example, the resolution of the preamble puncturing may be 20 MHz for an EHT MU PPDU in an OFDMA transmission with a bandwidth greater than 40 MHz and in a non-OFDMA transmission with a bandwidth of 80 MHz and 160 MHz. That is, in the above case, puncturing for a subchannel smaller than 242-tone RU may not be allowed. In addition, for an EHT MU PPDU in a non-OFDMA transmission with a bandwidth of 320 MHz, the resolution of the preamble puncturing may be 40 MHz. That is, puncturing for subchannels smaller than 484-tone RU in 320 MHz bandwidth may not be allowed. Also, preamble puncturing may not be applied for the primary 20 MHz channel in EHT MU PPDU.

Information about preamble puncturing applied to PPDU may be included in U-SIG and/or EHT-SIG. For example, the first field of U-SIG may include information about the contiguous bandwidth of the PPDU, and the second field of U-SIG may include information about preamble puncturing applied to the PPDU.

For example, the U-SIG and the EHT-SIG may include information on preamble puncturing based on the following method. If the bandwidth of the PPDU exceeds 80 MHz, the U-SIG may be individually constructed in units of 80 MHz. For example, if the bandwidth of the PPDU is 160 MHz, the PPDU may include a first U-SIG for a first 80 MHz band and a second U-SIG for a second 80 MHz band. In this case, the first field of the first U-SIG includes information on the 160 MHz bandwidth, and the second field of the first U-SIG includes information on preamble puncturing applied to the first 80 MHz band (i.e., information on a preamble puncturing pattern). In addition, the first field of the second U-SIG includes information on a 160 MHz bandwidth, and the second field of the second U-SIG includes information on preamble puncturing applied to a second 80 MHz band (i.e., information on a preamble puncturing pattern). The EHT-SIG following the first U-SIG may include information on preamble puncturing applied to the second 80 MHz band (i.e., information on a preamble puncturing pattern), and the EHT-SIG following the second U-SIG may include information on preamble puncturing applied to the first 80 MHz band (i.e., information on a preamble puncturing pattern).

Additionally or alternatively, the U-SIG and the EHT-SIG may include information on preamble puncturing based on the following method. The U-SIG may include information on preamble puncturing for all bands (i.e., information on a preamble puncturing pattern). That is, EHT-SIG does not include information on preamble puncturing, and only U-SIG may include information on preamble puncturing (i.e., information on a preamble puncturing pattern).

U-SIG may be constructed in units of 20 MHz. For example, if an 80 MHz PPDU is constructed, the U-SIG may be duplicated. That is, the same 4 U-SIGs may be included in the 80 MHz PPDU. PPDUs exceeding 80 MHz bandwidth may include different U-SIGs.

The EHT-SIG of FIG. 13 may include control information for the receiving STA. EHT-SIG may be transmitted through at least one symbol, and one symbol may have a length of 4us. Information on the number of symbols used for EHT-SIG may be included in U-SIG.

The EHT-SIG may include technical features of HE-SIG-B described through FIGS. 11 and 12. For example, EHT-SIG, like the example of FIG. 8, may include a common field and a user-specific field. The Common field of the EHT-SIG may be omitted, and the number of user-specific fields may be determined based on the number of users.

As in the example of FIG. 11, the common field of the EHT-SIG and the user-specific field of the EHT-SIG may be coded separately. One user block field included in the user-specific field may contain information for two user fields, but the last user block field included in the user-specific field may contain one or two user fields. That is, one user block field of the EHT-SIG may contain up to two user fields. As in the example of FIG. 12, each user field may be related to MU-MIMO allocation or non-MU-MIMO allocation.

In the same way as in the example of FIG. 11, the common field of the EHT-SIG may include a CRC bit and a Tail bit, The length of the CRC bit may be determined as 4 bits, and the length of the tail bit is determined by 6 bits and may be set to 000000.

As in the example of FIG. 11, the common field of the EHT-SIG may include RU allocation information. RU allocation information may mean information on the location of an RU to which a plurality of users (i.e., a plurality of receiving STAs) are allocated. RU allocation information may be configured in units of 9 bits (or N bits).

A mode in which a common field of EHT-SIG is omitted may be supported. The mode in which the common field of the EHT-SIG is omitted may be referred as a compressed mode. When the compressed mode is used, a plurality of users (i.e., a plurality of receiving STAs) of the EHT PPDU may decode the PPDU (e.g., the data field of the PPDU) based on non-OFDMA. That is, a plurality of users of the EHT PPDU may decode a PPDU (e.g., a data field of the PPDU) received through the same frequency band. When a non-compressed mode is used, multiple users of the EHT PPDU may decode the PPDU (e.g., the data field of the PPDU) based on OFDMA. That is, a plurality of users of the EHT PPDU may receive the PPDU (e.g., the data field of the PPDU) through different frequency bands.

EHT-SIG may be configured based on various MCS techniques. As described above, information related to the MCS scheme applied to EHT-SIG may be included in U-SIG. EHT-SIG can be configured based on DCM scheme. DCM scheme may provide an effect similar to frequency diversity, reduce interference, and improve coverage by reusing the same signal on two subcarriers. For example, modulation symbols to which the same modulation scheme is applied can be repeatedly mapped on available tones/subcarriers. For example, among N data tones (e.g., 52 data tones) allocated for EHT-SIG, a modulation symbol (e.g., BPSK modulation symbol) to which a specific modulation scheme is applied may be mapped to the first consecutive half tones (e.g., the 1st to 26th tones), and a modulation symbol (e.g., BPSK modulation symbol) to which the same specific modulation scheme is applied may be mapped to the remaining consecutive half tones (e.g., the 27th to 52nd tones). That is, the modulation symbol mapped to the 1st tone and the modulation symbol mapped to the 27th tone are the same.

As described above, information (e.g., a 1-bit field) related to whether the DCM technique is applied to the EHT-SIG may be included in the U-SIG. The EHT-STF of Fig. 13 may be used to improve automatic gain control (AGC) estimation in a MIMO environment or an OFDMA environment. The EHT-LTF of Fig. 13 may be used to estimate a channel in a MIMO environment or an OFDMA environment.

Information on the type of STF and/or LTF (including information on a guard interval (GI) applied to LTF) may be included in the U-SIG field and/or the EHT-SIG field of FIG. 13.

The PPDU (i.e., EHT PPDU) of FIG. 13 may be constructed based on an example of RU allocation of FIGS. 8 to 10.

For example, a EHT PPDU transmitted on a 20 MHz band, that is, a 20 MHz EHT PPDU may be constructed based on the RU of FIG. 8. That is, a RU location of EHT-STF, EHT-LTF, and data field included in the EHT PPDU may be determined as shown in FIG. 8. A EHT PPDU transmitted on a 40 MHz band, that is, a 40 MHz EHT PPDU may be constructed based on the RU of FIG. 9. That is, a RU location of EHT-STF, EHT-LTF, and data field included in the EHT PPDU may be determined as shown in FIG. 9.

The EHT PPDU transmitted on the 80 MHz band, that is, the 80 MHz EHT PPDU may be constructed based on the RU of FIG. 10. That is, a RU location of EHT-STF, EHT-LTF, and data field included in the EHT PPDU may be determined as shown in FIG. 10. The tone-plan for 80 MHz in FIG. 10 may correspond to two repetitions of the tone-plan for 40 MHz in FIG. 9.

The tone-plan for 160/240/320 MHz may be configured in the form of repeating the pattern of FIG. 9 or 10 several times.

The PPDU of FIG. 13 may be identified as an EHT PPDU based on the following method.

The receiving STA may determine the type of the received PPDU as the EHT PPDU based on the following. For example, when 1) the first symbol after the L-LTF signal of the received PPDU is BPSK, 2) RL-SIG in which the L-SIG of the received PPDU is repeated is detected, and 3) the result of applying the modulo 3 calculation to the value of the Length field of the L-SIG of the received PPDU (i.e., the remainder after dividing by 3) is detected as 0, the received PPDU may be determined as a EHT PPDU. When the received PPDU is determined to be an EHT PPDU, the receiving STA may determine the type of the EHT PPDU based on bit information included in symbols subsequent to the RL-SIG of FIG. 13. In other words, the receiving STA may determine the received PPDU as a EHT PPDU, based on 1) the first symbol after the L-LTF signal, which is BSPK, 2) RL-SIG contiguous to the L-SIG field and identical to the L-SIG, and 3) L-SIG including a Length field in which the result of applying modulo 3 is set to 0.

For example, the receiving STA may determine the type of the received PPDU as the HE PPDU based on the following. For example, when 1) the first symbol after the L-LTF signal is BPSK, 2) RL-SIG in which L-SIG is repeated is detected, and 3) the result of applying modulo 3 to the length value of L-SIG is detected as 1 or 2, the received PPDU may be determined as a HE PPDU.

For example, the receiving STA may determine the type of the received PPDU as non-HT, HT, and VHT PPDU based on the following. For example, when 1) the first symbol after the L-LTF signal is BPSK and 2) RL-SIG in which L-SIG is repeated is not detected, the received PPDU may be determined as non-HT, HT, and VHT PPDU.

In addition, if the receiving STA detects an RL-SIG with repeated L-SIG in the received PPDU, it may be determined that it is a HE PPDU or an EHT PPDU. In this case, if the rate (6 Mbps) check fails, the received PPDU may be determined as a non-HT, HT, or VHT PPDU. If the rate (6 Mbps) check and the parity check pass, if the result of applying modulo 3 to the Length value of the L-SIG is detected as 0, the received PPDU can be determined as an EHT PPDU, and if the result of Length mod 3 is not 0, it may be determined as a HE PPDU.

The PPDU of FIG. 13 may be used to transmit and receive various types of frames. For example, the PPDU of FIG. 13 may be used for (simultaneous) transmission and reception of one or more of a control frame, a management frame, or a data frame.

Hereinafter, the U-SIG included in the EHT PPDU will be described in more detail.

For a 40 MHz EHT PPDU or Extended Range (ER) preamble, the U-SIG content is the same in both 20 MHz subchannels. For an 80 MHz EHT PPDU or ER preamble, the U-SIG content is the same in all non-punctured 20 MHz subchannels. For a 160/320 MHz EHT PPDU or ER preamble, the U-SIG content is the same on all non-punctured 20 MHz subchannels within each 80 MHz subblock and may be different from the U-SIG content in other 80 MHz subblocks.

The U-SIG-1 part of the U-SIG of an EHT MU PPDU may include PHY version identifier (B0-B2), BW (B3-B5), UL/DL (B6), BSS color (B7-B12), and TXOP (B13-B19), Disregard (B20-B24), and Validate (B25).

And, the U-SIG-2 part of the EHT MU PPDU may include PPDU type and compression mode (B0-B1), validate (B2), punctured channel information (B3-B7), validation (B8), EHT-SIG MCS (B9-B10), number of EHT-SIG symbols (B11-B15), CRC (B16-B19), and tail (B20-B25).

For example, assume that the UL/DL field values are set to 0. When the PPDU Type and Compression Mode (B0-B1) field value of the U-SIG-2 part is 0, this indicates a DL OFDMA transmission. When the PPDU Type and Compression Mode (B0-B1) field value of the U-SIG-2 part is 1, this indicates an EHT SU transmission or an EHT sounding NDP. When the PPDU Type and Compression Mode (B0-B1) field value of the U-SIG-2 part is 2, this indicates a non-OFDMA DL MU-MIMO transmission.

As another example, assume that the UL/DL field value is set to 1. When the PPDU Type and Compression Mode (B0-B1) field value of the U-SIG-2 part is 0, this may indicate a TB PPDU (e.g., UL OFDMA or UL-non-OFDMA). And, when the PPDU Type and Compression Mode (B0-B1) field value of the U-SIG-2 part is 1, this may indicate an EHT SU transmission or an EHT sounding NDP.

Here, an example of 5-bit punctured channel indication for non-OFDMA case in EHT MU PPDU is given in Table 1 below.

**[Table 1]**

| **PPDU bandwidth** | **Cases** | **Puncturing pattern** | **Field value** |
|---|---|---|---|
| 20/40 MHz | No puncturing | [1 1 1 1] | 0 |
| 80 MHz | No puncturing | [1 1 1 1] | 0 |
| | 20 MHz puncturing | [x 1 1 1] | 1 |
| | | [1 x 1 1] | 2 |
| | | [1 1 x 1] | 3 |
| | | [1 1 1 x] | 4 |
| 160 MHz | No puncturing | [1 1 1 1 1 1 1 1] | 0 |
| | 20 MHz puncturing | [x 1 1 1 1 1 1 1] | 1 |
| | | [1 x 1 1 1 1 1 1] | 2 |
| | | [1 1 x 1 1 1 1 1] | 3 |
| | | [1 1 1 x 1 1 1 1] | 4 |
| | | [1 1 1 1 x 1 1 1] | 5 |
| | | [1 1 1 1 1 x 1 1] | 6 |
| | | [1 1 1 1 1 1 x 1] | 7 |
| | | [1 1 1 1 1 1 1 x] | 8 |
| | 40 MHz puncturing | [x x 1 1 1 1 1 1] | 9 |
| | | [1 1 x x 1 1 1 1] | 10 |
| | | [1 1 1 1 x x 1 1] | 11 |
| | | [1 1 1 1 1 1 x x] | 12 |
| 320 MHz | No puncturing | [1 1 1 1 1 1 1 1] | 0 |
| | 40 MHz puncturing | [x 1 1 1 1 1 1 1] | 1 |
| | | [1 x 1 1 1 1 1 1] | 2 |
| | | [1 1 x 1 1 1 1 1] | 3 |
| | | [1 1 1 x 1 1 1 1] | 4 |
| | | [1 1 1 1 x 1 1 1] | 5 |
| | | [1 1 1 1 1 x 1 1] | 6 |
| | | [1 1 1 1 1 1 x 1] | 7 |
| | | [1 1 1 1 1 1 1 x] | 8 |
| | 80 MHz puncturing | [x x 1 1 1 1 1 1] | 9 |
| | | [1 1 x x 1 1 1 1] | 10 |
| | | [1 1 1 1 x x 1 1] | 11 |
| | | [1 1 1 1 1 1 x x] | 12 |
| | 320-80-40 | [x x x 1 1 1 1 1] | 13 |
| | | [x x 1 x 1 1 1 1] | 14 |
| | | [x x 1 1 x 1 1 1] | 15 |
| | | [x x 1 1 1 x 1 1] | 16 |
| | | [x x 1 1 1 1 x 1] | 17 |
| | | [x x 1 1 1 1 1 x] | 18 |
| | | [x 1 1 1 1 1 x x] | 19 |
| | | [1 x 1 1 1 1 x x] | 20 |
| | | [1 1 x 1 1 1 1 x x] | 21 |
| | | [1 1 1 x 1 1 x x] | 22 |
| | | [1 1 1 1 x 1 x x] | 23 |
| | | [1 1 1 1 1 x x x] | 24 |

In the puncturing pattern of Table 1, 1 represents a non-punctured subchannel and x represents a punctured subchannel. The puncturing granularity for 80 MHz and 160 MHz PPDU bandwidths may be 20 MHz, and the puncturing granularity for 320 MHz PPDU bandwidth may be 40 MHz.

Next, the U-SIG-1 part of the U-SIG of the EHT TB PPDU may include a version identifier (B0-B2), BW (B3-B5), UL/DL (B6), BSS color (B7-B12), TXOP (B13-B19), and disregard (B20-B25), and the U-SIG-2 part may include a PPDU type and compression mode (B0-B1), validate (B2), spatial reuse 1 (B3-B6), spatial reuse 2 (B7-B10), disregard (B11-B15), CRC (B16-B19), and tail (B20-B25).

As described above, the U-SIG field of the EHT MU PPDU includes 5-bit punctured channel information, but the EHT TB PPDU does not include punctured channel information. This is because the EHT TB PPDU is assumed to be configured according to the resource allocation indicated by the trigger frame or TRS control information, and therefore there is no need for the STA to inform the AP of the resource information of the EHT TB PPDU.

### Structure of Aggregated-PPDU (A-PPDU)

In order to improve efficiency and throughput in a wireless LAN system, A-PPDU transmission may be defined in which PPDUs of different formats/versions are transmitted simultaneously.

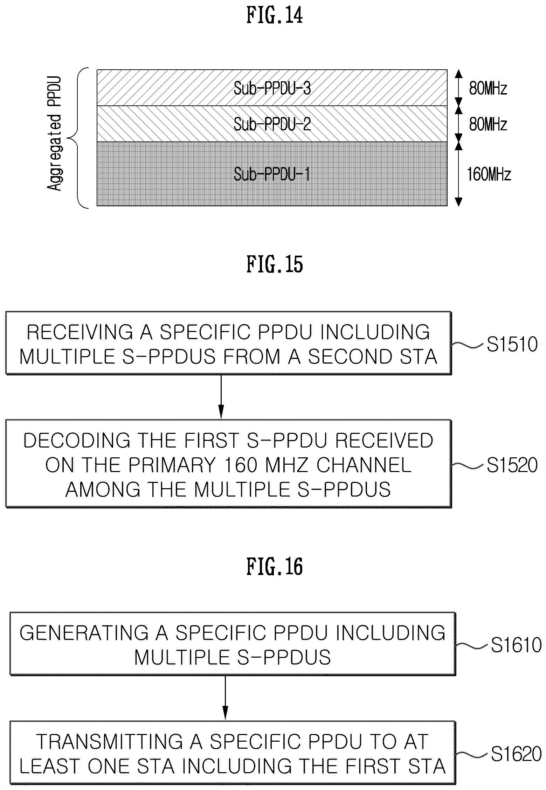

A-PPDU may correspond to a new format in which multiple PPDU formats are merged on the frequency domain. For example, referring to FIG. 14, in A-PPDU transmission, a first sub-PPDU (S-PPDU) format may be transmitted in a first frequency band (e.g., 160 MHz), a second S-PPDU format may be transmitted in a second frequency band (e.g., 80 MHz), and a third S-PPDU format may be transmitted in a third frequency band (e.g., 80 MHz) .

However, this is only one embodiment, and in A-PPDU transmission, a first S-PPDU format may be transmitted in a first frequency band, and a second S-PPDU format may be transmitted in a second frequency band.

Each S-PPDU constituting an A-PPDU may be a PPDU of a different format. For example, each S-PPDU may be one of a HE PPDU, an EHT PPDU, and a PPDU of a new format after EHT (hereinafter referred to as "UHR") (i.e., a PPDU of the next version) .

Here, each of the HE PPDU, the EHT PPDU, and the UHR PPDU may include a HE MU PPUD, an EHT MU PPUD, and a UHR MU PPDU. The UHR MU PPDU may have a similar structure to the EHT MU PPDU of OFDMA transmission or MU MIMO transmission. However, a dependent field of the U-SIG field of the UHR MU PPDU may be different from a dependent field of the U-SIG field of the EHT MU PPDU. In addition, the EHT MU PPUD may include a UHR SIG field instead of an EHT SIG field.

Considering the maximum bandwidth in IEEE 802.11 ax (i.e., HE) and the maximum operating bandwidth of HE STA, the minimum unit of S-PPDU can be defined as 160 MHz to prevent decoding errors of HE STA.

In addition, when A-PPDU is not defined in IEEE 802.11 be (i.e., EHT), the minimum unit of S-PPDU may be defined as 320 MHz to prevent decoding error of EHT STA considering the maximum bandwidth in EHT and the maximum operating bandwidth of EHT STA. Here, when A-PPDU is defined in EHT, EHT STA may always perform decoding operation in units of 160 MHz considering the operating bandwidth of HE STA.

When a HE PPDU having a bandwidth of up to 160 MHz (i.e., composed of S-PPDUs in 160 MHz units) is included in an A-PPDU, an error may occur when an EHT STA (i.e., an EHT STA operating at 320 MHz) performs a decoding operation. In particular, if the SST operation/setting is not applied, a decoding error may occur overall in one or more EHT STAs within the BSS. Therefore, if the SST operation/setting is not applied, it may not be desirable for a HE PPDU to be used as one S-PPDU.

Here, the SST may include an operation to dynamically change the primary channel within the entire bandwidth. For example, the SST operation may include operating under the assumption that only a portion of the entire bandwidth is the entire bandwidth.

STAs and APs having the capability to support SST operation can set up SST operation by negotiating a triggerenabled target wake time (TWT).

Additionally, a 320 MHz channel may be composed of a 320-1 MHz channel and a 320-2 MHz channel, and the 320-1 MHz channel and the 320-2 MHz channel may overlap each other. Accordingly, even if an S-PPDU is composed in units of 320 MHz channels, a decoding error may occur in an OBSS EHT STA (i.e., an EHT STA operating in a 320 MHz channel).

For example, when considering a transmission using a 640 MHz channel formed by two 320-1 MHz channels, an EHT PPDU may be configured in a primary (P) 320 MHz channel and a UHR PPDU may be configured in a secondary (S) 320 MHz channel. In this case, an OBSS EHT STA may decode EHT PPDUs in some 160 MHz channels and decode 320-2 MHz channels formed with UHR PPDUs in other 160 MHz channels, which may result in decoding errors.

When the above-described decoding error occurs, the OBSS EHT STA may at least decode the L-SIG length information (or field), and can use it to defer channel access during that time. Since the EHT STA within the BSS knows the channel configuration of 640 MHz, no additional problem may occur due to the decoding error.

As a result, if A-PPDU is not defined in EHT, decoding error may occur regardless of whether the S-PPDU unit is 160 MHz/320 MHz from the OBSS EHT STA perspective. Accordingly, the OBSS EHT STA may postpone channel access based on the L-SIG length information.

When the SST operation/setting is applied, a decoding error may not occur regardless of whether the S-PPDU unit is 160 MHz/320 MHz from the perspective of an EHT STA within a BSS. However, when the SST operation/setting is not applied, a decoding error may occur if an S-PPDU of 160 MHz is set. Therefore, an S-PPDU structure of 320 MHz units may be used when configuring an A-PPDU.

FIG. 15 is a diagram for describing an operation performed by a first STA according to an embodiment of the present disclosure. Here, the SST operation/setting may not be applied to the first STA, but is not limited thereto. In addition, "UHR" may mean a format/format after EHT (i.e., a next-generation format/format).

A first STA may receive a specific PPDU including multiple sub-physical layer protocol data units (S-PPDUs) from a second STA (S1510).

The first STA may decode the first S-PPDU received on the primary 160 MHz channel among the multiple S-PPDUs (S1520). For example, the first STA may decode the portion corresponding to the primary 20 MHz channel among the first S-PPDU.

Here, the first S-PPDU may include A-PPDU indication information (i.e., information indicating that a specific PPDU is an A-PPDU). Based on the first S-PPDU being a HE PPDU, the A-PPDU indication information (i.e., information indicating that a specific PPDU including the HE PPDU is an A-PPDU) may be set to at least one of bit 4 of an L-SIG field or an RL-SIG field of the HE PPDU, the 8th bit (B7) of the HE-SIG-A2 field of the HE PPDU, or the 20th bit (B19) of the User field of the HE-SIG-B field of the HE PPDU.

Additionally or alternatively, based on the first S-PPDU being an EHT PPDU, A-PPDU indication information (i.e., information indicating that a specific PPDU including the EHT PPDU is an A-PPDU) may be set to at least one of bit 4 of the L-SIG field or the RL-SIG field of the EHT PPDU, the 21st bit (B20) to the 25th bit (B24) of the U-SIG-1 field of the EHT PPDU, the 14th bit (B13) to the 17th bit (B16) of the common field of the EHT-SIG field of the EHT PPDU, or the 16th bit (B15) of the user field of the EHT-SIG field of the EHT PPDU.

A particular PPDU may include a second PPDU and a first pre-padding field among a plurality of S-PPDUs in a first secondary 160 MHz channel or a secondary 320 MHz channel. Here, based on the first S-PPDU being a HE PPDU, the second S-PPDU may be an EHT PPDU or a UHR PPDU. Based on the first S-PPDU being an EHT PPDU, the second S-PPDU may be a UHR PPDU.

Here, the first pre-padding field may include at least one of an alpha pre-padding and a null signal section in which no signal exists for a switching time from a primary 160 MHz channel to a first secondary 160 MHz channel or a secondary 320 MHz channel.

And, the length of the first pre-padding field may be the length from the L-STF included in the first S-PPDU to the HE-SIG-B field or the EHT-SIG field.

For example, assume that the first S-PPDU is a HE PPDU including a HE-SIG-B field. If it is determined that the HE-SIG-B field of the first S-PPDU does not include an STA ID corresponding to the first STA, the first STA may decode the second S-PPDU by switching from the primary 160 MHz channel to the first secondary 160 MHz channel or the secondary 320 MHz channel.

If the first STA is an EHT STA, the first STA may switch from the primary 160 MHz channel to the first secondary 160 MHz channel. If the first STA is a UHR STA, the first STA may switch from the primary 160 MHz channel to the first secondary 160 MHz channel or the secondary 320 MHz channel.

Additionally or alternatively, based on the second S-PPDU being received on the first secondary 160 MHz channel (i.e., based on the second S-PPDU being the first S-PPDU corresponding to the first secondary 160 MHz among the multiple S-PPDUs included in the specific PPDU), the specific PPDU may include a third PPDU corresponding to the second secondary 160 MHz channel. In this case, the second S-PPDU may be an EHT PPDU and the third S-PPDU may be a UHR PPDU.

Here, if it is determined that the EHT-SIG field of the EHT PPDU does not include a user field including an STA ID corresponding to the first STA, the first STA may decode the third S-PPDU by switching from the first secondary 160 MHz channel to the second secondary 160 MHz channel. Here, the first STA may be a UHR STA, but is not limited thereto.

In the second secondary 160 MHz channel, a first pre-padding field, a second pre-padding field, and a UHR PPDU may be transmitted from the base station to the terminal. The length of the second pre-padding field may be the length from the L-STF to the EHT-SIG field included in the EHT PPDU.

That is, a HE PPDU (i.e., a first S-PPDU) may be transmitted on a first primary 160 MHz channel, an EHT PPDU (i.e., a second S-PPDU) can be transmitted on a second secondary 160 MHz channel, and a UHR PPDU (i.e., a third S-PPDU) can be transmitted on a third secondary 160 MHz channel.

Here, the length of the HE PPDU may be equal to the sum of the length of the first pre-padding field and the length of the EHT PPDU, and the length of the EHT PPDU may be equal to the sum of the length of the second pre-padding field and the length of the UHR PPDU. In addition, the EHT PPDU may include information indicating that the EHT PPDU is a specific PPDU is an A-PPDU.

FIG. 16 is a diagram for explaining an operation performed by a second STA according to one embodiment of the present disclosure. The second STA may be an AP STA, but is not limited thereto, and may also be implemented as a non-AP STA.

The second STA may generate a specific PPDU including multiple sub-physical layer protocol data units (S-PPDUs) (S1610).

Each of the plurality of S-PPDUs may include a user field including a STA ID corresponding to at least one STA including the first STA. For example, the first S-PPDU/second S-PPDU/third S-PPDU included in the plurality of S-PPDUs may or may not include a user field including a STA ID corresponding to the first STA.

The second STA may transmit a specific PPDU to at least one STA including the first STA (S1620).

The configuration and related operations of a specific PPDU and multiple S-PPDUs correspond to the configuration and related operations of a specific PPDU and multiple S-PPDUs described in S1510 and S1520, so redundant descriptions are omitted.

In a basic wireless communication system, an operation of configuring an A-PPDU with multiple S-PPDUs configured in units of 160 MHz is not defined. As described above, as an example of the present disclosure, when the SST operation/setting is not applied, an A-PPDU may include multiple S-PPDUs configured in units of 160 MHz. In addition, the length of the pre-padding included in the A-PPDU may be configured as a length from the L-STF to the HE-SIG-B field (or the EHT-SIG field). Accordingly, when an S-PPDU corresponding to the HE-SIG-B field (or the EHT-SIG field) is not allocated to a specific STA, the specific STA may decode the subsequent S-PPDU by switching to a subsequent channel.

Hereinafter, the structure of A-PPDU and the method of constructing A-PPDU with pre-padding applied are described in detail.

### Embodiment 1

Embodiment 1 relates to the structure of an A-PPDU. It is assumed that the start of all S-PPDUs in an A-PPDU (e.g., the start position of each S-PPDU and/or information constituting the start (e.g., L-STF), etc.) is the same. That is, depending on the unit of the S-PPDU, a decoding issue of the A-PPDU may occur in a specific STA.

In addition, the end of the S-PPDU within the A-PPDU (e.g., the position where the S-PPDU ends, etc.) may also be the same. That is, the L-length of the L-SIG field of each S-PPDU constituting the A-PPDU may all be configured with the same value.

### Embodiment 1-1

Embodiment 1-1 relates to a method of configuring an A-PPDU with a combination of S-PPDUs in units of 160 MHz in a bandwidth of 320 MHz.

For example, HE PPDU may be positioned/allocated at primary (P) 160 MHz, and EHT PPDU or UHR PPDU may be positioned/allocated at secondary (S) 160 MHz. As another example, EHT PPDU may be positioned/allocated at P160 MHz, and UHR PPDU may be positioned/allocated at S160 MHz. As another example, UHR PPDU may be positioned/allocated at P160 MHz, and EHT PPDU may be positioned/allocated at S160 MHz.

As another example of the present disclosure, S-PPDUs of the same type of version/format may be configured. For example, EHT PPDU or UHR PPDU may be independently positioned/allocated to each of P160 MHz and S160 MHz.

As described above, when an A-PPDU is configured, one or more 20 MHz channels within each 160 MHz channel may be punctured. And, since the maximum bandwidth in HE is 160 MHz, HE PPDU cannot be located/allocated to S160 MHz.

If A-PPDU is not defined in EHT and SST operation/setting is not applied, A-PPDU composed of S-PPDU in 160 MHz units may cause decoding issue from the perspective of EHT STA (320 MHz operating EHT STA) within BSS. In addition, decoding issue may always occur for OBSS EHT STA regardless of whether SST operation/setting is applied.

### Embodiment 1-2

Embodiment 1-2 relates to a method of configuring an A-PPDU with a combination of S-PPDUs in 160 MHz units or 320 MHz units in a 640 MHz bandwidth.

Here, since the maximum bandwidth of HE is 160 MHz, HE PPDU cannot be located/allocated to S160 MHz/S320 MHz. Since the maximum bandwidth of EHT is 320 MHz, EHT PPDU cannot be located/allocated to S320 MHz.

For example, in P160 MHz among 640 MHz, one of HE PPDU, EHT PPDU, or UHR PPDU may be located/allocated. In S160 MHz among 640 MHz, one of EHT PPDU or UHR PPDU may be located/allocated. In the remaining S320 MHz among 640 MHz, UHR PPDU can be located/allocated.

As described above, S-PPDUs of the same type of version/format may be configured. For example, EHT PPDU or UHR PPDU may be independently positioned/allocated at S160 MHz and S320 MHz, respectively.

As another example, assume that a UHR PPDU is positioned/allocated at S320 MHz. In this case, one UHR PPDU may be positioned/allocated at S320 MHz, but independent UHR PPDUs may be positioned/allocated at each 160 MHz.

As another example of the present disclosure, assume that one of HE PPDU, EHT PPDU, or UHR PPDU is positioned/allocated in P160 MHz among 640 MHz. In this case, S160 MHz may be punctured and UHR PPDU may be positioned/allocated in the remaining S320 MHz. That is, S160 MHz channel may not be used for A-PPDU transmission as it is punctured.

As another example of the present disclosure, EHT PPDU or UHR PPDU may be located/allocated at P320 MHz among 640 MHz, and UHR PPDU may be located/allocated at S320 MHz.

When an A-PPDU is configured as described above, one or more 20 MHz within each 160/320 MHz channel may be punctured. For example, if S160 MHz is not punctured, one 160 MHz channel in S320 MHz may be punctured. Additionally or alternatively, one or more 20 MHz channels in 160 MHz channels other than the punctured 160 MHz channel in S320 MHz may be punctured. In this case, a UHR PPDU of S320 MHz may configure an S-PPDU by using a bandwidth less than or equal to 160 MHz.

For example, one of HE PPDU, EHT PPDU, or UHR PPDU may be located/allocated in P160 MHz, one of EHT PPDU or UHR PPDU may be located/allocated in S160 MHz, and UHR PPDU can be located/allocated in SS160 MHz. Here, when a specific 160 MHz of S320 MHz (e.g., high 160 MHz or low 160 MHz of S320 MHz) is punctured, SS160 MHz may mean the remaining 160 MHz (e.g., low 160 MHz or high of S320 MHz).

When an A-PPDU is configured as described above, one or more 20 MHz channels within each 160 MHz channel may be punctured.

If A-PPDU is not defined in EHT and SST operation/setting is not applied, A-PPDU composed of S-PPDU in 160 MHz units may cause decoding issue from the perspective of EHT STA (320 MHz operating EHT STA) within BSS. In addition, decoding issue may always occur for OBSS EHT STA regardless of whether SST operation/setting is applied.

Regardless of whether SST operation/setting is applied or not, if A-PPDU is not defined in EHT, A-PPDU with S-PPDU in 320 MHz units may cause decoding issue from OBSS EHT STA perspective.

### Embodiment 1-3

Embodiment 1-3 relates to a method of configuring an A-PPDU with a combination of S-PPDUs in 160 MHz units or 320 MHz units in a 480 MHz bandwidth.

An A-PPDU in a 480 MHz bandwidth may be configured by puncturing 160 MHz of one of S160 MHz or S320 MHz in an A-PPDU configuration configured in a 640 MHz bandwidth. In this case, an A-PPDU structure configured by puncturing the one 160 MHz can be excluded from the A-PPDU configuration in the 640 MHz bandwidth.

For example, among 480 MHz, P160 MHz may be positioned/allocated with one of HE PPDU, EHT PPDU or UHR PPDU, and the remaining S320 MHz may be positioned/allocated with one of EHT PPDU or UHR PPDU.

The decoding issues of EHT STA and HE STA may be solved by the various types of A-PPDU structures described above, and the constraints related to S-PPDU units may be removed.

### Embodiment 2

Embodiment 2 relates to a structure of an A(aggregated)-PPDU to which pre-padding is applied. That is, Embodiment 2 and the detailed embodiments of Embodiment 2 relate to an A-PPDU structure to which pre-padding is applied in order to solve a decoding issue according to the operating bandwidth of HE STA and EHT STA.

The A-PPDU structure with pre-padding applied can also be used for uplink transmission. In this case, each S-PPDU constituting the A-PPDU used for uplink transmission may include a TB PPDU instead of an MU PPDU. However, in the uplink situation, since the receiver is an AP that knows the A-PPDU configuration, there may be no need to apply pre-padding to the corresponding A-PPDU.

### Embodiment 2-1

Embodiment 2-1 relates to an A-PPDU structure in which pre-padding is applied when SST operation/setting is not applied.

Depending on the bandwidth unit of the S-PPDU, a decoding error may occur between HE/EHT STAs. For example, if the unit of the S-PPDU bandwidth is less than 160 MHz, an error may occur when the HE/EHT STA decodes the corresponding A-PPDU. As another example, if the unit of the S-PPDU bandwidth is more than 160 MHz and less than 320 MHz, an error may occur when the EHT STA decodes the A-PPDU.

When an STA detects a PPDU by L-STF within its operating bandwidth, it may merge specific fields of the channel detected by L-STF during decoding. Here, a situation may occur where different fields in S-PPDUs of different versions/formats are merged, and thus, problems related to decoding errors may occur.

To address the above-described issue, pre-padding may be added to a specific S-PPDU. Pre-padding may be inserted into a specific S-PPDU only when the S-PPDU unit is less than 320 MHz, but is not limited thereto. Regardless of the S-PPDU unit, pre-padding may always be inserted into a specific S-PPDU.

As an example of the present disclosure, a Sub-HE PPDU may be transmitted using a specific channel 1 within P160 MHz.

Channel 1 may be configured in units of 20, 40, 80, or 160 MHz. For example, channel 1 may be configured in units of 80 or 160 MHz, taking complexity into account, and may always include P20 MHz. However, when SST is operated/configured, channel 1 may not include P20.

Sub HE PPDU may include A-PPDU indication information and channel switching indication information. A-PPDU indication information and channel switching indication information are described in Embodiment 2-3.

As another example of the present disclosure, at least one of pre-padding 1, alpha pre-padding, null signal, and sub EHT PPDU may be transmitted using a specific channel 2 within P320. As another example, a sub EHT PPDU may be transmitted using a specific channel 2 within P320.

For example, when a Sub HE PPDU is included in an A-PPDU (e.g., when a sub HE PPDU is transmitted through a specific channel 1 within P160 MHz), at least one of pre-padding 1, alpha pre-padding, null signal, and a sub EHT PPDU may be transmitted using a specific channel 2 within P320. When a sub HE PPDU is not included in an A-PPDU, a sub EHT PPDU can be transmitted using a specific channel 2 within P320.

Channel 2 may be configured in units of 20, 40, 80, 160, or 320 MHz. In this case, when 480 or 640 MHz is defined as the total bandwidth, channel 2 may be configured in units of 320 MHz. As an example, channel 2 may be configured in units of 80, 160, or 320 MHz considering complexity.

If Sub HE PPDU is not included in A-PPDU, Channel 2 may be the channel that always includes P20. However, if SST is enabled/configured, Channel 1 may not include P20.

The pre-padding may consist of the length from the beginning of the sub HE PPDU (i.e., L-STF) to the HE-SIG-B field. EHT/UHR STAs may determine whether the sub HE PPDU including P20 is allocated to the EHT/UHR STA by decoding the sub HE PPDU.

If the corresponding sub HE PPDU is not allocated to the corresponding EHT/UHR STA, the EHT/UHR STA may decode the sub EHT PPDU by switching to the channel on which the sub EHT PPDU is transmitted. Here, the sub HE PPDU may include information indicating switching to the channel on which the sub EHT PPDU is transmitted.

If A-PPDU is not defined in EHT, EHT STA may not be able to switch to a channel where sub EHT PPDU is transmitted. That is, it may not be desirable for sub HE PPDU and sub EHT PPDU to exist simultaneously within an A-PPDU.

Alpha pre-padding may be configured to secure switching time. For example, pre-padding 1 including alpha pre-padding may be configured on the A-PPDU. As another example, if pre-padding 1 is configured or there is no need to secure switching time separately, alpha pre-padding may not be configured separately. The length of alpha pre-padding may be set considering the switching time of EHT/UHR STA (which takes the most time).

In order to facilitate detection of L-STF in Sub EHT PPDU, an interval during which no signal exists for a certain time (e.g., SIFS or DIFS) may be set, which may be referred to as a null signal/interval. Accordingly, the signal power of the null signal may be 0.

Pre-padding 1/alpha pre-padding with null signal/interval may be configured on the A-PPDU. That is, the signal power may be 0 for a certain period of time after or within the pre-padding 1/alpha pre-padding.

As another example, if there is no need to set a null interval or if an interval where no signal exists in the pre-padding 1/alpha pre-padding is configured, a separate null signal may not be configured.

Sub EHT PPDU may include A-PPDU indication information and indication information for channel switching information. The A-PPDU indication information and indication information for channel switching are described in Embodiment 2-3.

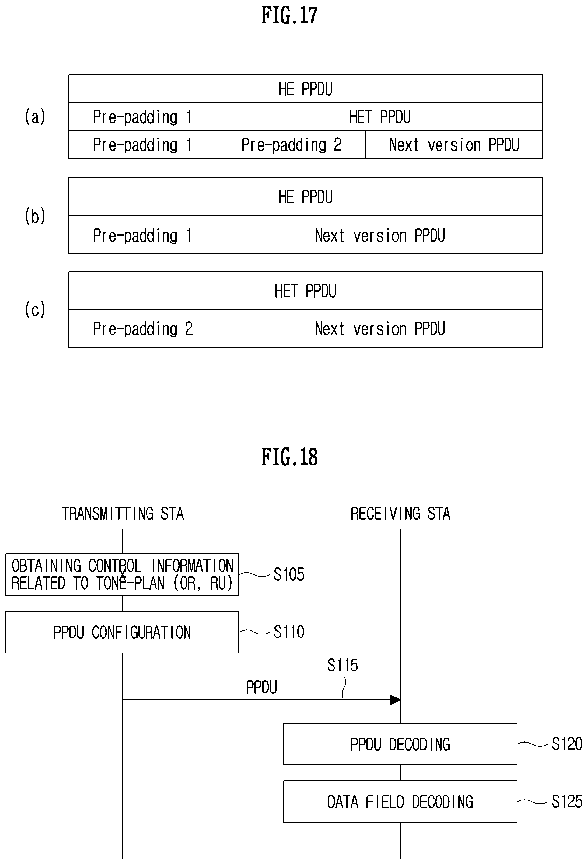

As another example of the present disclosure, assume a case where both sub HE PPDU and sub EHT PPDU are included in an A-PPDU, as illustrated in (a) of FIG. 17. In this case, pre-padding 1, pre-padding 2, and sub UHR PPDU may be transmitted using a specific channel 3 within 320, 480, or/and 640 MHz.

Here, at least one of a pre-padding having the same length as the alpha pre-padding time and a pre-padding having the same length as the null signal time can be added to the pre-padding 1. And, at least one of an alpha pre-padding and a null signal can be added to the pre-padding 2.

As illustrated in (b) and (c) of FIG. 17, when only one of sub HE PPDU and sub EHT PPDU is included in the A-PPDU, pre-padding 1/pre-padding 2 and sub UHR PPDU can be transmitted using the specific channel 3. Here, at least one of alpha pre-padding and null signal can be added to pre-padding 1/prepadding 2.

A specific channel 3 may be configured in units of 20, 40, 80, 160, or 320 MHz, but may also be configured in units of 80, 160, or 320 MHz for reasons of complexity. A specific channel 3 in units of 320 MHz may be configured only when 480/640 MHz bandwidth is introduced.

As an example of the present disclosure, it is assumed that an A-PPDU is configured as in (a) of FIG. 17. The length of pre-padding 1 may be the length from the beginning of the sub HE PPDU (i.e., L-STF) to the HE-SIG-B field.

Each EHT/UHR STA MAY decode the sub HE PPDU including P20 to determine whether the corresponding sub HE PPDU is allocated to each EHT/UHR STA. If the corresponding sub HE PPDU is not allocated to each EHT/UHR STA, each EHT/UHR STA can decode the sub EHT PPDU by switching to a channel on which the sub EHT PPDU is transmitted. At this time, the sub HE PPDU can include information indicating switching to the channel on which the sub EHT PPDU is transmitted.

If A-PPDU is not defined in EHT, EHT STA may not be able to switch to a channel where sub EHT PPDU is transmitted. That is, it may not be desirable for sub HE PPDU and sub EHT PPDU to exist simultaneously within an A-PPDU.

If alpha pre-padding is required (or set) for a channel through which the Sub EHT PPDU is transmitted, additional pre-padding of a length corresponding to the alpha pre-padding may be present on the channel through which the Sub EHT PPDU is transmitted. Additionally, if a null signal/interval is required (or set) for a channel through which the Sub EHT PPDU is transmitted, additional pre-padding of a length corresponding to the null signal/interval may be present on the channel through which the Sub EHT PPDU is transmitted.

The length of pre-padding 2 may be the length from the L-STF of the sub EHT PPDU to the EHT SIG field. UHR STAs to which the sub HE PPDU is not allocated can determine whether the sub EHT PPDU is allocated to the UHR STA by decoding the sub EHT PPDU through channel switching. If the sub EHT PPDU is not allocated to the UHR STA, the UHR STA may decode the UHR PPDU by switching to the channel on which the UHR PPDU is transmitted. In this case, the sub EHT PPDU can include information indicating switching to the channel on which the sub UHR PPDU is transmitted.

Alpha pre-padding may be configured to secure channel switching time, and pre-padding 2 including alpha pre-padding may be configured. Here, if time for securing channel switching time is configured in pre-padding 2 or a separate time for channel switching is not required, alpha pre-padding may not exist.

Here, the length of the alpha pre-padding may be set based on the channel switching time of the UHR STA that takes the longest channel switching time.

In order to facilitate detection of L-STF in Sub UHR PPDU, a period during which no signal exists for a certain period of time (e.g., SIFS or DIFS) may be set, which may be referred to as a null signal/period. Accordingly, the signal power of the null signal may be 0.

Pre-padding 2/alpha pre-padding with null signal/interval may be configured on the A-PPDU. That is, the signal power may be 0 for a certain period of time after or within the pre-padding 2/alpha pre-padding.

As another example, if there is no need to set a null interval or if an interval where no signal exists in the pre-padding 2/alpha pre-padding is set, a separate null signal may not be configured.

As an example of the present disclosure, it is assumed that an A-PPDU is configured as in (b) or (c) of FIG. 17.

As illustrated in (b) of FIG. 17, when a sub HE PPDU and a UHR PPDU are transmitted together, pre-padding 1 may be used. The length of pre-padding 1 may be the length from the beginning of the sub HE PPDU (i.e., L-STF) to the HE-SIG-B field.

UHR STAs may determine whether the sub HE PPDU including P20 is allocated to the UHR STA by decoding the sub HE PPDU. If the sub HE PPDU is not allocated to the UHR STA, the UHR STA can decode the UHR PPDU by switching to the channel on which the UHR PPDU is being transmitted. At this time, the sub HE PPDU may include information indicating switching to the channel on which the UHR PPDU is being transmitted.

As illustrated in (c) of FIG. 17, when a sub EHT PPDU and a UHR PPDU are transmitted together, pre-padding 2 may be used. The length of pre-padding 2 may be the length from the beginning of the sub EHT PPDU (i.e., L-STF) to the EHT-SIG field.

UHR STAs may determine whether the sub EHT PPDU containing P20 is allocated to the UHR STA by decoding the sub EHT PPDU. If the sub EHT PPDU is not allocated to the UHR STA, the UHR STA may decode the UHR PPDU by switching to the channel on which the UHR PPDU is being transmitted. Here, the sub UHR PPDU may include information indicating switching to the channel on which the UHR PPDU is being transmitted.

Alpha pre-padding may be configured to secure channel switching time, and pre-padding 1/2 including alpha pre-padding may be configured. In this case, if time for securing channel switching time is configured in pre-padding 1/2 or a separate time for channel switching is not required, alpha pre-padding may not exist.

Here, the length of the alpha pre-padding may be set based on the channel switching time of the UHR STA that takes the longest channel switching time.

In order to facilitate detection of L-STF in Sub UHR PPDU, a period during which no signal exists for a certain period of time (e.g., SIFS or DIFS) may be set, which may be referred to as a null signal/period. Accordingly, the signal power of the null signal may be 0**.**

Pre-padding 1/2/alpha pre-padding with null signal/interval may be configured on the A-PPDU. That is, the signal power may be 0 for a certain period of time after or within the pre-padding 1/2/alpha pre-padding.

As another example, if there is no need to set a null interval or if an interval where no signal exists in the pre-padding 1/2/alpha pre-padding is set, a separate null signal may not be configured.

All pre-padding (i.e., pre-padding 1/2, alpha pre-padding, alpha pre-padding/pre-padding of the same length as the null signal time) (except the null signal part) may be signals with low correlation with L-STF and L-LTF, which is intended to reduce the PPDU detection probability.

Additionally or alternatively, the pre-padding may be configured based on a specific field. That is, at least one of the L-SIG field/RL-SIG field/U-SIG field/EHT-SIG field/EHT-STF field/EHT-LTF field/data field/HE-SIG-A field/HE-SIG-B field/HE-STF/HE-LTF/UHR SIG field/UHR STF/UHR LTF may be repeated, and the repeated at least one may be configured as the pre-padding. Additionally or alternatively, at least one symbol of a specific field may be repeated, and the repeated at least one symbol may be configured as the pre-padding.

### Embodiment 2-2

Embodiment 2-2 relates to the A-PPDU structure when SST operation/setting is applied.

In order to unify the A-PPDU structure, even if the SST operation/setting is applied, the A-PPDU may be configured as described in Embodiment 2-1, and thus the decoding problem of OBSS STAs can be solved.

As another example, when SST operation/setting is applied, decoding can be performed only for specific channels, so pre-padding and null signals may not be included on the A-PPDU.

As another example, when the SST operation/setting is applied, the alpha pre-padding and null signal may be excluded from the A-PPDU structure described in Embodiment 2-1. That is, the A-PPDU may include pre-padding 1/2, and may not include the alpha pre-padding and null signal.

Here since channel switching is not required as the SST operation/setting is applied, the length of pre-padding 1/2 may be shorter than the length of pre-padding 1 in embodiment 2-1. For example, the length of pre-padding 1/2 included in the A-PPDU when the SST operation/setting is applied may be the combined length of L-STF and L-LTF or the combined length of L-STF, L-LTF, L-SIG field, and RL-SIG field.

### Embodiment 2-3

Embodiment 2-3 relates to A-PPDU indication information and channel switch indication information.

A-PPDU indication information and channel switching indication information may be transmitted and received through sub HE PPDU and/or sub EHT PPDU, and an STA may perform an A-PPDU indication and a channel switching indication through the A-PPDU indication information and the channel switching indication information.

For example, A-PPDU indication information and channel switching indication information may be set through reserved bits/fields of Sub HE PPDU. As another example, A-PPDU indication information and channel switching indication information may be set through reserved bits/fields and disregard bits of Sub EHT PPDU.

A-PPDU indication information and channel switching indication information may be indicated by setting the reserved bits/fields and/or ignore fields described above to values other than the default values.

### Embodiment 2-3-1

Embodiment 2-3-1 relates to a method for setting A-PPDU indication information and channel switching indication information through specific fields/bits of Sub HE PPDU.

In the examples described below, A-PPDU indication information and channel switching indication information may be indicated by default values or/and non-default values of specific fields/bits of sub HE PPDU. In addition, if A-PPDU is not defined in EHT, channel switching of EHT STA may not be possible.

For example, A-PPDU indication information and channel switching indication information may be set in the reserved bit (Bit 4) of the L-SIG field/RL-SIG field of the Sub HE PPDU. The default value of the reserved bit (Bit 4) of the L-SIG field/RL-SIG field may be 0.

As another example, A-PPDU indication information and channel switching indication information may be set in the 15th bit (B14) of HE-SIG-A1 of Sub HE SU PPDU (wherein, the default value of B14 is 1) or/and the 15th bit (B14) of HE-SIG-A2 (wherein, the default value of B14 is 1).

As another example, A-PPDU indication information and channel switching indication information may be set in the 8th bit (B7) of HE-SIG-A2 of Sub HE MU PPDU (wherein, the default value of B7 is 1).

As another example, during MU MIMO transmission, A-PPDU indication information and channel switching indication information may be set in the 20th bit (B19) in the user field of the HE-SIG-B field of the sub HE PPDU (wherein, the default value of B19 is 0).

Information to switch to a specific channel may be indicated via specific fields/bits or combinations thereof of the sub HE PPDU described above.

For example, if a sub EHT PPDU exists in the A-PPDU, a specific field/bit or a combination thereof of the above-described sub HE PPDU may indicate information to switch to a channel on which a sub EHT PPDU is transmitted. If a sub EHT PPDU does not exist in the A-PPDU, a specific field/bit or a combination thereof of the above-described sub HE PPDU may indicate information to switch to a channel on which a sub UHR PPDU is transmitted.

A-PPDU indication information and channel switching indication information can exist together. That is, A-PPDU indication information and channel switching indication information can be indicated together by a specific field/bit or a combination thereof. However, this is only an example, and A-PPDU indication information and channel switching indication information can be indicated independently, respectively.

When channel switching indication information is separately indicated, information indicating switching to a specific channel may not be set as the default value of a specific field/bit (i.e., a field/bit related to the channel switching indication information).

For example, when the value of Bit 4 of the L-SIG/RL-SIG field of the sub HE PPDU is set to 1, this may indicate an A-PPDU (i.e., indicating that the corresponding sub HE PPDU is included in an A-PPDU). In addition, channel switching information may be indicated by the 8th bit (B7) of the HE-SIG-A2 field of the sub HE PPDU.

For example, assume that the total bandwidth is 640 MHz. If the value of B7 of the HE-SIG-A2 field is set to 0, this may indicate switching to S160 MHz. If the value of B7 of the HE-SIG-A2 field is set to 1, this may indicate switching to S320 MHz.

As another example, assume that the total bandwidth is 320 MHz. If the value of B7 of the HE-SIG-A2 field is set to 0, this may indicate switching to S80 MHz. If the value of B7 of the HE-SIG-A2 field is set to 1, this may indicate switching to S160 MHz.

As another example, assume that the total bandwidth is 320 MHz. If the value of Bit 4 of the L-SIG/RL-SIG field of the sub HE PPDU is set to 1 and the value of B7 of the HE-SIG-A2 field is set to 0, this may indicate switching to S80 MHz. If the value of Bit 4 of the L-SIG/RL-SIG field of the sub HE PPDU is set to 1 and the value of B7 of the HE-SIG-A2 field is set to 1, this may indicate switching to a lower 80 MHz within S160 MHz. If the value of Bit 4 of the L-SIG/RL-SIG field of the sub HE PPDU is set to 0 and the value of B7 of the HE-SIG-A2 field is set to 0, this may indicate switching to a higher 80 MHz within S160 MHz.

Additionally or alternatively, A-PPDU indication information and channel switching indication information may be indicated via a combination of specific fields/bits of the L-SIG field, RL-SIG field, HE-SIG-A field, and HE-SIG-B field of the above-described sub HE PPDU.

An EHT/UHR STA may switch to a specific channel through information of the specific fields/bits described above of the sub HE PPDU if there is no user field configured with its STA ID in the HE-SIG-B field of the sub HE PPDU.

### Embodiment 2-3-2

Embodiment 2-3-2 relates to a method of setting A-PPDU indication information and channel switching indication information through specific fields/bits of Sub EHT PPDU.

In the examples described below, A-PPDU indication information and channel switching indication information can be indicated by default values or/and non-default values of specific fields/bits of sub EHT PPDU.

For example, A-PPDU indication information and channel switching indication information may be set in the reserved bit (Bit 4) of the L-SIG field/RL-SIG field of the Sub EHT PPDU. The default value of the reserved bit (Bit 4) of the L-SIG field/RL-SIG field may be 0.

As another example, A-PPDU indication information and channel switching indication information may be set in at least one of the 21st bit (B20) to the 25th bit (B24) of the U-SIG1 field of the Sub EHT PPDU. The default value of all of B21 to B24 of the U-SIG1 field may be 1.

As another example, A-PPDU indication information and channel switching indication information may be set in at least one of the 14th bit (B13) to the 17th bit (B16) in the common field of the EHT-SIG field of the Sub EHT PPDU. In this case, the default values of B13 to B16 in the common field may all be 1.

In case of non-MU MIMO transmission, A-PPDU indication information and channel switching indication information may be set in the 16th bit (B15) in the user field of the EHT-SIG field of the sub EHT PPDU (wherein, the default value of B15 is 1).

Information to switch to a channel on which a UHR EHT PPDU is transmitted may be indicated via specific fields/bits or combinations thereof of the sub EHT PPDU described above.

A-PPDU indication information and channel switching indication information may exist together. That is, A-PPDU indication information and channel switching indication information may be indicated together by a specific field/bit or a combination thereof. However, this is only an example, and A-PPDU indication information and channel switching indication information may be indicated independently.

For example, if the 21st bit (B20) of the U-SIG1 field of the sub EHT PPDU is set to 0, this may indicate an A-PPDU (i.e., indicating that the sub EHT PPDU is included in the A-PPDU) .

In addition, a bitmap indicating channel switching within a 320 MHz bandwidth may be set for the 22nd bit (B21) to the 25th bit (B24) of the U-SIG1 field. At this time, the bitmap indicating channel switching within a 320 MHz bandwidth may indicate channel switching in 80 MHz channel units.

As another example, a bitmap indicating channel switching within a 640 MHz bandwidth may be set for the 22nd bit (B21) to the 25th bit (B24) of the U-SIG1 field. In this case, the bitmap indicating channel switching within a 640 MHz bandwidth may indicate channel switching in 160 MHz channel units.

As another example, a bitmap indicating channel switching within a 640 MHz bandwidth may be set for bits B21 to B24 of the U-SIG1 field and the 14th bit (B13) to 17th bit (B16) of the common field in the EHT-SIG field. In this case, the bitmap indicating channel switching within a 640 MHz bandwidth may indicate channel switching in 80 MHz channel units.

As another example of the present disclosure, channel switching indication information may be indicated via a specific value rather than a bitmap. For example, if the value of the 21st bit (B20) of the U-SIG1 field is set to 0, this may indicate an A-PPDU (i.e., indicating that a sub EHT PPDU is included in the A-PPDU). In addition, information indicating switching to a specific channel may be set for specific values of B21 to B24 of the U-SIG1 field.

For example, a specific channel mapped to a specific value of B21 to B24 of the U-SIG field may be implemented as shown in Table 2. A channel to be switched to a physical location other than the primary channel or the secondary channel may also be indicated.

**[Table 2]**

| Values B21 to B24 of the U-SIG field | Channel to be switched |
|---|---|
| 0 | P80 MHz |
| 1 | S80 MHz |
| 2 | The lowest 80MHz of S160 MHz |
| 3 | The highest 80MHz of S160 MHz |
| 4 | The lowest 80MHz among S320 MHz |
| 5 | The second lowest 80 MHz among S320 MHz |
| 6 | The second highest 80 MHz among S320 MHz |
| 7 | The highest 80MHz among S320 MHz |

In another example of the present disclosure, specific fields/bits of the above-described sub EHT PPDU may not be used for A-PPDU indication. A channel to be switched may be indicated through only a specific number of bits among the specific fields/bits of the above-described sub EHT PPDU. In this case, the bits indicating the channel to be switched may not be all set to default values at the same time. As an example, channel switching may be performed using B20 to B23 of the U-SIG1 field. In this case, when indicating channel switching, not all of B20 to B23 of the U-SIG1 field may be set to 1.

A-PPDU indication information/channel switching information can be indicated by various combinations of specific fields/bits of the above-described sub EHT PPDU. That is, the combination of specific fields/bits of the sub EHT PPDU for indicating A-PPDU indication information/channel switching information and the mapping of the specific field/bit values may vary.

If there is no user field configured with its STA ID in the EHT-SIG field of the sub EHT PPDU, the UHR STA may switch to a specific channel (e.g., a channel on which the UHR PPDU is transmitted) using information of the above-described specific fields/bits of the sub EHT PPDU.

FIG. 18 is a diagram for explaining a PPDU transmission and reception procedure between a transmitting STA and a receiving STA according to one embodiment of the present disclosure. Some of the step(s) shown in FIG. 17 may be omitted depending on the situation and/or setting. The transmitting device and the receiving STA may be an AP and/or a non-AP STA.

The transmitting STA may obtain control information related to the tone plan (or RU) described above (S105). The control information related to the tone plan may include the size and location of the RU, control information related to the RU, information about the frequency band in which the RU is included, information about the STA receiving the RU, etc.

The transmitting STA may configure/generate a PPDU based on the acquired control information (S110). Configuring/generating a PPDU may mean configuring/generating each field of the PPDU. That is, the step of configuring/generating a PPDU may include a step of configuring an EHT-SIG-A/B/C field including control information regarding a tone plan.

That is, the step of configuring/generating a PPDU may include a step of configuring a field including control information (e.g., an N bitmap) indicating the size/position of the RU and/or a step of configuring a field including an identifier (e.g., an AID) of an STA receiving the RU.

Additionally, the step of configuring/generating a PPDU may include a step of generating an STF/LTF sequence to be transmitted via a specific RU. The STF/LTF sequence may be generated based on a preset STF generation sequence/LTF generation sequence.

Additionally, the step of configuring/generating a PPDU may include a step of generating a data field (i.e., an MPDU) to be transmitted via a specific RU.

The transmitting STA may transmit the configured/generated PPDU to the receiving STA (S115).

Specifically, the transmitting STA may perform at least one of cyclic shift diversity (CSD), spatial mapping, inverse discrete Fourier transform (IDFT)/inverse fast Fourier transform (IFFT) operation, guard interval (GI) insert operation, etc.

The receiving STA may decode the PPDU and obtain control information related to the tone plan (or RU) (S120).

Specifically, the receiving STA may decode the L-SIG, U-SIG and EHT-SIG of the PPDU based on the L-STF/LTF, and obtain information included in the L-SIG, U-SIG and EHT SIG fields. Information about various tone-plans (i.e., RUs) of the present disclosure can be included in the EHT-SIG (e.g., EHT-SIG-A/B/C), and the receiving STA can obtain information about the tone-plan (i.e., RU) through the EHT-SIG.

The receiving STA may decode the remaining part of the PPDU based on the information about the acquired tone-plan (i.e., RU) (S125). For example, the receiving STA may decode the STF/LTF field of the PPDU based on the information about the tone-plan (i.e., RU). In addition, the receiving STA may decode the data field of the PPDU based on the information about the tone-plan (i.e., RU) and obtain the MPDU included in the data field.

In addition, the receiving STA may perform a processing operation to transfer the decoded data to a higher layer (e.g., a MAC layer). In addition, if the generation of a signal is instructed from the higher layer to the PHY layer in response to the data transferred to the higher layer, the receiving STA may perform a subsequent operation.

Embodiments described above are that elements and features of the present disclosure are combined in a predetermined form. Each element or feature should be considered to be optional unless otherwise explicitly mentioned. Each element or feature may be implemented in a form that it is not combined with other element or feature. In addition, an embodiment of the present disclosure may include combining a part of elements and/or features. An order of operations described in embodiments of the present disclosure may be changed. Some elements or features of one embodiment may be included in other embodiment or may be substituted with a corresponding element or a feature of other embodiment. It is clear that an embodiment may include combining claims without an explicit dependency relationship in claims or may be included as a new claim by amendment after application.

It is clear to a person skilled in the pertinent art that the present disclosure may be implemented in other specific form in a scope not going beyond an essential feature of the present disclosure. Accordingly, the above-described detailed description should not be restrictively construed in every aspect and should be considered to be illustrative. A scope of the present disclosure should be determined by reasonable construction of an attached claim and all changes within an equivalent scope of the present disclosure are included in a scope of the present disclosure.

A scope of the present disclosure includes software or machine-executable commands (e.g., an operating system, an application, a firmware, a program, etc.) which execute an operation according to a method of various embodiments in a device or a computer and a non-transitory computer-readable medium that such a software or a command, etc. are stored and are executable in a device or a computer. A command which may be used to program a processing system performing a feature described in the present disclosure may be stored in a storage medium or a computer-readable storage medium and a feature described in the present disclosure may be implemented by using a computer program product including such a storage medium. A storage medium may include a high-speed random-access memory such as DRAM, SRAM, DDR RAM or other random-access solid state memory device, but it is not limited thereto, and it may include a nonvolatile memory such as one or more magnetic disk storage devices, optical disk storage devices, flash memory devices or other nonvolatile solid state storage devices. A memory optionally includes one or more storage devices positioned remotely from processor(s). A memory or alternatively, nonvolatile memory device(s) in a memory include a non-transitory computer-readable storage medium. A feature described in the present disclosure may be stored in any one of machine-readable mediums to control a hardware of a processing system and may be integrated into a software and/or a firmware which allows a processing system to interact with other mechanism utilizing a result from an embodiment of the present disclosure. Such a software or a firmware may include an application code, a device driver, an operating system and an execution environment/container, but it is not limited thereto.

### [Industrial Applicability]

A method proposed by the present disclosure is mainly described based on an example applied to an IEEE 802.11-based system, 5G system, but may be applied to various WLAN or wireless communication systems other than the IEEE 802.11-based system.

## Claims

1. A method performed by a first station (STA) in a wireless LAN system, the method comprising:
receiving, from a second STA, a specific physical layer protocol data unit (PPDU) including a plurality of sub-PPDUs (S-PPDUs); and
decoding a first S-PPDU received on a primary 160 MHz channel among the plurality of S-PPDUs, wherein the first S-PPDU including information indicating that the specific PPDU is an A (aggregated)-PPDU,
wherein the specific PPDU includes a second S-PPDU and a first pre-padding field among the plurality of S-PPDUs in a first secondary 160 MHz channel or a secondary 320 MHz channel, and
wherein a length of the first pre-padding field is a length from an L(legacy)-STF(short training field) included in the first S-PPDU to an HE(high throughput)-SIG-B field or an EHT(extremely high throughput)-SIG field.

2. The method of claim 1, wherein:
based on the first S-PPDU being a HE PPDU including the HE-SIG-B field:
based on a user field including a STA ID corresponding to the first STA being not included in the HE-SIG-B field, the second S-PPDU is decoded by switching from the primary 160 MHz channel to the first secondary 160 MHz channel or the secondary 320 MHz channel by the first STA.

3. The method of claim 1, wherein:
based on the first S-PPDU being a HE PPDU, the second S-PPDU is an EHT PPDU or an UHR (ultra-high reliability) PPDU, and
based on the first S-PPDU being an EHT PPDU, the second S-PPDU is a UHR PPDU.

4. The method of claim 1, wherein:
the first pre-padding field includes an alpha pre-padding and a null signal interval in which no signal exists for a switching time from the primary 160 MHz channel to the first secondary 160 MHz channel or the secondary 320 MHz channel.

5. The method of claim 1, wherein:
based on the second S-PPDU being received on the first secondary 160 MHz channel, the specific PPDU includes a third PPDU corresponding to the second secondary 160 MHz channel, and
the second S-PPDU is an EHT PPDU, and
the third S-PPDU is a UHR PPDU.

6. The method of claim 5, wherein:
based on a user field including a STA ID corresponding to the first STA being not included in a EHT-SIG field of the EHT PPDU, the third S-PPDU is decoded by switching from the first secondary 160 MHz channel to the second secondary 160 MHz channel by the first STA.

7. The method of claim 5, wherein:
the first pre-padding field, a second pre-padding field, and the UHR PPDU are received from the base station in the second secondary 160 MHz channel.

8. The method of claim 7, wherein:
a length of the second pre-padding field is a length from a L-STF to a EHT-SIG field included in the EHT PPDU.

9. The method of claim 7, wherein:
the EHT PPDU includes information indicating that the specific PPDU is an A-PPDU.

10. The method of claim 2, wherein:
information indicating that the specific PPDU is an A-PPDU is set to at least one of bit 4 of a L-SIG field or a RL-SIG field of the HE PPDU, a 8th bit (B7) of a HE-SIG-A2 field of the HE PPDU, or a 20th bit (B19) of a user field of a HE-SIG-B field of the HE PPDU.

11. The method of claim 9, wherein:
information indicating that the specific PPDU is an A-PPDU is set to at least one of bit 4 of a L-SIG field or a RL-SIG field of the EHT PPDU, a 21st bit (B20) to the 25th bit (B24) of a U(universal)-SIG-1 field of the EHT PPDU, a 14th bit (B13) to a 17th bit (B16) of a common field of a EHT-SIG field of the EHT PPDU, or a 16th bit (16) of a user field of a EHT-SIG field of the EHT PPDU.

12. The method of claim 1, wherein:
a SST (subchannel selective transmission) setting is not applied to the first STA.

13. The method of claim 7, wherein:
a length of the HE PPDU is equal to a sum of a length of the first pre-padding field and a length of the EHT PPDU, and
a length of the EHT PPDU is equal to a sum of a length of the second pre-padding field and a length of the UHR PPDU.

14. A first station (STA) in a wireless LAN system, the first STA comprising:
at least one transceiver; and
at least one processor connected to the at least one transceiver,
wherein the at least one processor is configured to:
receive, from a second STA through the at least one transceiver, a specific physical layer protocol data unit (PPDU) including a plurality of sub-PPDUs (S-PPDUs); and
decode a first S-PPDU received on a primary 160 MHz channel among the plurality of S-PPDUs, wherein the first S-PPDU including information indicating that the specific PPDU is an A (aggregated)-PPDU,
wherein the specific PPDU includes a second S-PPDU and a first pre-padding field among the plurality of S-PPDUs in a first secondary 160 MHz channel or a secondary 320 MHz channel, and
wherein a length of the first pre-padding field is a length from an L(legacy)-STF(short training field) included in the first S-PPDU to an HE(high throughput)-SIG-B field or an EHT(extremely high throughput)-SIG field.

15. A method peformed by a second station (STA) in a wireless LAN system, the method comprising:
generating a specific physical layer protocol data unit (PPDU) including multiple sub-PPDUs (S-PPDUs);
transmitting the specific PPDU to at least one STA including the first STA,
wherein the specific PPDU includes a first S-PPDU among the plurality of S-PPDUs in a primary 160 MHz channel, a second S-PPDU among the plurality of S-PPDUs in a first secondary 160 MHz channel or a secondary 320 MHz channel, and a first pre-padding field,
wherein the first S-PPDU includes information indicating that the specific PPDU is an A(aggregated)-PPDU, and
wherein a length of the first pre-padding field is a length from an L(legacy)-STF(short training field) included in the first S-PPDU to an HE(high throughput)-SIG-B field or an EHT(extremely high throughput)-SIG field.

16. A second station (STA) in a wireless LAN system, the second STA comprising:
at least one transceiver; and
at least one processor connected to the at least one transceiver,
wherein the at least one processor is configured to:
generate a specific physical layer protocol data unit (PPDU) including multiple sub-PPDUs (S-PPDUs);
transmit the specific PPDU to at least one STA including the first STA through the at least one transceiver,
wherein the specific PPDU includes a first S-PPDU among the plurality of S-PPDUs in a primary 160 MHz channel, a second S-PPDU among the plurality of S-PPDUs in a first secondary 160 MHz channel or a secondary 320 MHz channel, and a first pre-padding field,
wherein the first S-PPDU includes information indicating that the specific PPDU is an A(aggregated)-PPDU, and
wherein a length of the first pre-padding field is a length from an L(legacy)-STF(short training field) included in the first S-PPDU to an HE(high throughput)-SIG-B field or an EHT(extremely high throughput)-SIG field.

17. A processing apparatus configured to control a station (STA) operation in a wireless LAN system, the processing apparatus comprising:
at least one processor; and
at least one computer memory operably connected to the at least one processor and storing instructions that, based on being executed by the at least one processor, perform operations comprising:
receiving, from a second STA, a specific physical layer protocol data unit (PPDU) including a plurality of sub-PPDUs (S-PPDUs); and
decoding a first S-PPDU received on a primary 160 MHz channel among the plurality of S-PPDUs, wherein the first S-PPDU including information indicating that the specific PPDU is an A (aggregated)-PPDU,
wherein the specific PPDU includes a second S-PPDU and a first pre-padding field among the plurality of S-PPDUs in a first secondary 160 MHz channel or a secondary 320 MHz channel, and
wherein a length of the first pre-padding field is a length from an L(legacy)-STF(short training field) included in the first S-PPDU to an HE(high throughput)-SIG-B field or an EHT(extremely high throughput)-SIG field.

18. At least one non-transitory computer-readable medium storing at least one instruction,
wherein the at least one instruction executable by at least one processor controls a device in a wireless LAN system to:
receive, from a second STA, a specific physical layer protocol data unit (PPDU) including a plurality of sub-PPDUs (S-PPDUs); and
decode a first S-PPDU received on a primary 160 MHz channel among the plurality of S-PPDUs, wherein the first S-PPDU including information indicating that the specific PPDU is an A (aggregated)-PPDU,
wherein the specific PPDU includes a second S-PPDU and a first pre-padding field among the plurality of S-PPDUs in a first secondary 160 MHz channel or a secondary 320 MHz channel, and
wherein a length of the first pre-padding field is a length from an L(legacy)-STF(short training field) included in the first S-PPDU to an HE(high throughput)-SIG-B field or an EHT(extremely high throughput)-SIG field.
